(19) Europäisches Patentamt
European Patent Office
Office européen des brevets

(11) Veröffentlichungsnummer: **0 348 344 B1**

(12) **EUROPÄISCHE PATENTSCHRIFT**

(45) Veröffentlichungstag der Patentschrift: **29.12.93**

(51) Int. Cl.$^5$: **C09B 43/16**, D06P 1/41

(21) Anmeldenummer: **89810443.5**

(22) Anmeldetag: **13.06.89**

(54) **Azofarbstoffe.**

(30) Priorität: **21.06.88 CH 2381/88**

(43) Veröffentlichungstag der Anmeldung:
**27.12.89 Patentblatt 89/52**

(45) Bekanntmachung des Hinweises auf die Patenterteilung:
**29.12.93 Patentblatt 93/52**

(84) Benannte Vertragsstaaten:
**BE CH DE ES FR GB IT LI**

(56) Entgegenhaltungen:
**EP-A- 0 168 961**
**DE-A- 1 544 425**
**DE-A- 3 337 799**
**GB-A- 1 525 280**

**CHEMICAL ABSTRACTS, Band 98, Nr. 2, Januar 1983, Seite 55, Zusammenfassung Nr. 5565w, Columbus, Ohio, US; & JP-A-57 102 972 (ORIENT CHEMICAL INDUSTRIES LTD) 26-06-1982**

(73) Patentinhaber: **CIBA-GEIGY AG**
**Klybeckstrasse 141**
**CH-4002 Basel(CH)**

(72) Erfinder: **Schaulin, Rudolf, Dr.**
**Schäferstrasse 62**
**CH-4125 Riehen(CH)**

**EP 0 348 344 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Azofarbstoffe, Verfahren zu deren Herstellung sowie deren Verwendung zum Färben und Bedrucken von Fasermaterialien, insbesondere von textilen Fasermaterialien.

Gegenstand der vorliegenden Erfindung sind Verbindungen der Formel

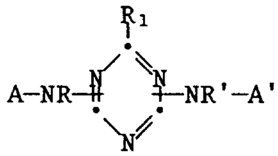

(1),

worin A ein Rest der Formel

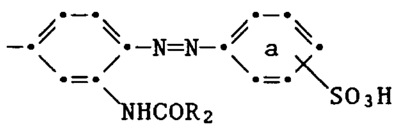

(2)

ist, A' die Bedeutung von A hat oder für einen von A verschiedenen Rest der Formel

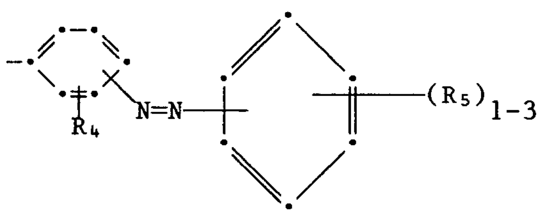

,

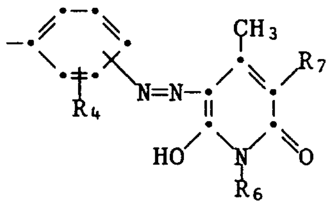

,

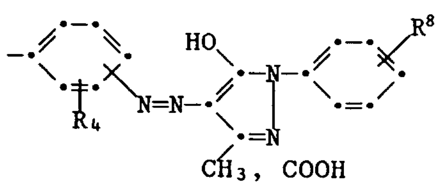

oder

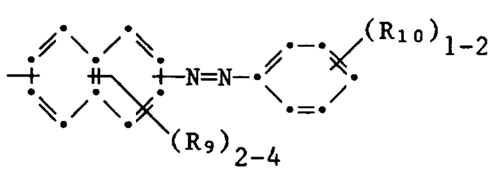

,

worin $R_4$ Wasserstoff, Methyl, Methoxy, Sulfo, Chlor, Acetylamino, Hydroxymethylamino, Propionylamino oder Carboxy ist, $R_5$ für 1 bis 3 gleiche oder verschiedene Reste ausgewählt aus der Gruppe Sulfo, Methyl, Methoxy, Chlor, Hydroxy, Carboxy und o-, m- oder p-Sulfophenylazo steht, $R_6$ Wasserstoff, $C_1$-$C_4$-Alkyl

oder $C_1$-$C_4$-Alkoxy-$C_1$-$C_4$-alkyl bedeutet, $R_7$ Sulfomethyl, Cyano oder Carbamoyl ist, $R_8$ Wasserstoff, Methyl, Methoxy, Chlor, Sulfo oder Carboxy ist, $R_9$ für 2 bis 4 gleiche oder verschiedene Substituenten ausgewählt aus der Gruppe Hydroxy und Sulfo steht und $R_{10}$ 1 oder 2 gleiche oder verschiedene Reste ausgewählt aus der Gruppe Wasserstoff, Methyl, Methoxy, Sulfo, Hydroxy, Amino, Acetylamino und Hydroxyacetylamino bedeutet, steht, R und R' unabhängig voneinander Wasserstoff oder gegebenenfalls substituiertes $C_1$-$C_4$-Alkyl bedeuten, $R_1$ Hydroxy, $C_1$-$C_4$-Alkoxy, Halogen, $C_1$-$C_4$-Alkylthio, Amino, unsubstituiertes oder im Alkylteil durch Hydroxy, Carboxy oder $C_1$-$C_4$-Alkoxy substituiertes N-Mono-oder N,N-Di-$C_1$-$C_4$-Alkylamino, Cyclohexylamino, unsubstituiertes oder im Phenylteil durch $C_1$-$C_4$-Alkyl, $C_1$-$C_4$-Alkoxy, Carboxy, Sulfo und/oder Halogen substituiertes Phenylamino oder N-$C_1$-$C_4$-Alkyl-N-phenylamino, Morpholino, Piperidino oder 3-Carboxy- oder 3-Carbonamidopyridin-1-yl bedeutet, $R_2$ für gegebenenfalls substituiertes $C_1$-$C_4$-Alkyl steht und der Phenylrest (a) gegebenenfalls weitersubstituiert ist.

Die Substituenten R und R', die gleich oder voneinander verschieden sind, haben die Bedeutung Wasserstoff oder unsubstituiertes oder z.B. durch Chlor, Hydroxy, Cyano, Carboxy, Sulfo, Sulfato, Methoxy, Ethoxy, Methoxycarbonyl oder Ethoxycarbonyl substituiertes $C_1$-$C_4$-Alkyl. Die Bedeutung Sulfo umfasst generell die freie Säureform ($-SO_3H$) als auch die Salzform, wobei insbesondere Alkalimetallsalze (Li, Na, K) oder Ammoniumsalze in Frage kommen.

Beispiele für geeignete Substituenten R und R' sind:

$C_1$-$C_4$-Alkyl, womit generell Methyl, Ethyl, n- oder iso-Propyl, oder n-, iso-, sec.- oder tert.-Butyl umfasst sind; Carboxymethyl, $\beta$-Carboxyethyl, Methoxycarbonylmethyl, Ethoxycarbonylmethyl, $\beta$-Methoxyethyl, $\beta$-Ethoxyethyl, $\beta$-Chlorethyl, $\gamma$-Chlorpropyl, $\beta$-Hydroxyethyl, $\beta$-Hydroxybutyl, $\beta$-Cyanethyl, Sulfomethyl, $\beta$-Sulfoethyl, $\beta$-Sulfatoethyl.

R und R' stehen unabhängig voneinander bevorzugt für Methyl oder Ethyl und besonders bevorzugt jeweils für Wasserstoff.

Der Substituent $R_1$ hat z.B. die Bedeutung Hydroxy, $C_1$-$C_4$-Alkoxy, worunter generell Methoxy, Ethoxy, n- oder iso-Propoxy oder n-, iso-, sec.- oder tert.-Butoxy zu verstehen ist, Halogen, z.B. Brom und insbesondere Chlor, $C_1$-$C_4$-Alkylthio, Amino, unsubstituiertes oder im Alkylteil durch Hydroxy, Carboxy oder $C_1$-$C_4$-Alkoxy substituiertes N-Mono- oder N,N-Di-$C_1$-$C_4$-Alkylamino, Cyclohexylamino, unsubstituiertes oder im Phenylteil durch $C_1$-$C_4$-Alkyl, $C_1$-$C_4$-Alkoxy, Carboxy, Sulfo und/oder Halogen substituiertes Phenylamino oder N-$C_1$-$C_4$-Alkyl-N-phenylamino, Morpholino, Piperidino oder 3-Carboxy- oder 3-Carbonamidopyridin-1-yl.

Beispiele für geeignete Substituenten $R_1$ sind somit Hydroxy, Methoxy, Ethoxy, n-oder iso-Propoxy, Chlor, Ethylthio, Amino, Methylamino, Ethylamino, Carboxymethylamino, $\beta$-Hydroxyethylamino, N,N-Di-$\beta$-hydroxyethylamino, Cyclohexylamino, o-, m- oder p-Methylphenylamino, o-, m- oder p-Methoxyphenylamino, o-, m- oder p-Chlorphenylamino, o-, m- oder p-Sulfophenylamino, 2,4- oder 2,5-Disulfophenylamino, o-Carboxyphenylamino, N-Ethyl-N-phenylamino, N-Methyl-N-phenylamino, Morpholino, Piperidino, 3-Carboxypyridin-1-yl oder 3-Carbonamidopyridin-1-yl.

$R_1$ steht vorzugsweise für unsubstituiertes oder im Alkylteil durch Hydroxy, Carboxy, Methoxy oder Ethoxy substituiertes N-Mono- oder N,N-Di-$C_1$-$C_4$-Alkylamino, unsubstituiertes oder im Phenylteil durch Chlor, Methyl, Methoxy und/oder Sulfo substituiertes Phenylamino, N-$C_1$-$C_4$-Alkyl-N-phenylamino, $C_1$-$C_4$-Alkylthio, Chlor, Morpholino oder Piperidino.

Besonders bevorzugt ist für $R_1$ die Bedeutung eines unsubstituierten oder im Alkylteil durch Hydroxy, Methoxy oder Ethoxy substituierten N-Mono- oder N,N-Di-$C_1$-$C_4$-Alkylaminorestes. Von Interesse sind ausserdem Verbindungen der Formel (1), worin $R_1$ Morpholino bedeutet.

Eine besonders bevorzugte Ausführungsform der vorliegenden Erfindung betrifft Verbindungen der zuvor angegebenen Formel (1), worin $R_1$ ein N-Hydroxy-$C_1$-$C_2$-alkylamino- oder N,N-Di-hydroxy-$C_1$-$C_2$-alkylaminorest und insbesondere der N,N-Di-$\beta$-hydroxyethylaminorest ist.

Bei $R_2$ im Rest der Formel (2) handelt es sich z.B. um einen unsubstituierten oder z.B. durch Hydroxy substituierten $C_1$-$C_4$-Alkylrest und vorzugsweise um einen unsubstituierten oder durch Hydroxy substituierten $C_1$-$C_3$-Alkylrest. Beispiele für geeignete Substituenten $R_2$ sind Methyl, Ethyl, n- oder iso-Propyl, Hydroxymethyl, $\beta$-Hydroxyethyl, $\gamma$-Hydroxypropyl, wobei die Bedeutungen Methyl und Hydroxymethyl besonders bevorzugt sind.

Der Phenylrest (a) kann z.B. durch einen oder mehrere gleiche oder verschiedene Substituenten ausgewählt aus der Gruppe $C_1$-$C_4$-Alkyl, $C_1$-$C_4$-Alkoxy, Halogen, Hydroxy, Carboxy, Sulfo, $-NHCOR_2$, wobei $R_2$ die zuvor angegebene Bedeutung hat, und Arylazo weitersubstituiert sein.

Geeignete Arylazo-Substituenten am Phenylrest (a) sind z.B. ein 1- oder 2-Naphthylazorest oder vorzugsweise ein Phenylazorest, wobei die genannten Reste jeweils unsubstituiert oder z.B. durch Sulfo, $C_1$-$C_4$-Alkyl, $C_1$-$C_4$-Alkoxy, Hydroxy und/oder Halogen weitersubstituiert sein können. Ist der Phenylrest (a) durch einen Arylazorest substituiert, handelt es sich dabei vorzugsweise um einen unsubstituierten oder

durch Sulfo, Methyl, Methoxy und/oder Chlor substituierten Phenylazorest.

Der Phenylrest (a) trägt vorzugsweise keine weiteren Substituenten oder ist durch einen oder mehrere Substituenten ausgewählt aus der Gruppe $C_1$-$C_4$-Alkyl, $C_1$-$C_4$-Alkoxy, Halogen, Hydroxy und Carboxy weitersubstituiert. Besonders bevorzugt trägt der Phenylrest (a) keine weiteren Substituenten oder ist einfach durch Methyl, Methoxy oder Chlor weitersubstituiert.

A' entspricht besonders bevorzugt dem Rest eines gelben Farbstoffes der Formel

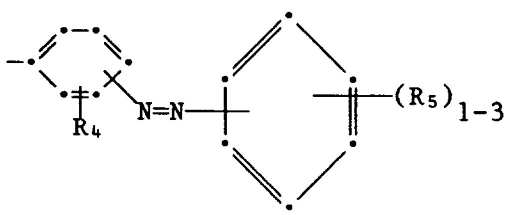
,

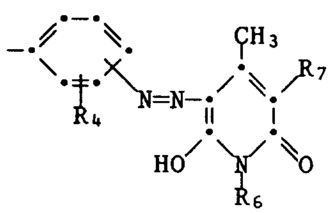
,

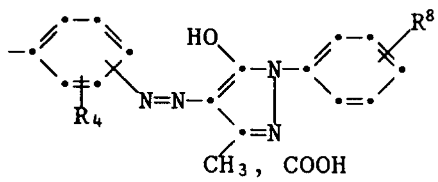
oder

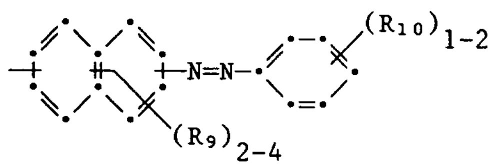
,

worin $R_4$ Wasserstoff, Methyl, Methoxy, Sulfo, Chlor, Acetylamino, Hydroxymethylamino, Propionylamino oder Carboxy ist, $R_5$ für 1 bis 3 gleiche oder verschiedene Reste ausgewählt aus der Gruppe Sulfo, Methyl, Methoxy, Chlor, Hydroxy, Carboxy und o-, m- oder p-Sulfophenylazo steht, $R_6$ Wasserstoff, $C_1$-$C_4$-Alkyl oder $C_1$-$C_4$-Alkoxy-$C_1$-$C_4$-alkyl bedeutet, $R_7$ Sulfomethyl, Cyano oder Carbamoyl ist, $R_8$ Wasserstoff, Methyl, Methoxy, Chlor, Sulfo oder Carboxy ist, $R_9$ für 2 bis 4 gleiche oder verschiedene Substituenten ausgewählt aus der Gruppe Hydroxy und Sulfo steht und $R_{10}$ 1 oder 2 gleiche oder verschiedene Reste ausgewählt aus der Gruppe Wasserstoff, Methyl, Methoxy, Sulfo, Hydroxy, Amino, Acetylamino und Hydroxyacetylamino bedeutet.

Eine bevorzugte Ausführungsform der vorliegenden Erfindung betrifft Verbindungen der Formel

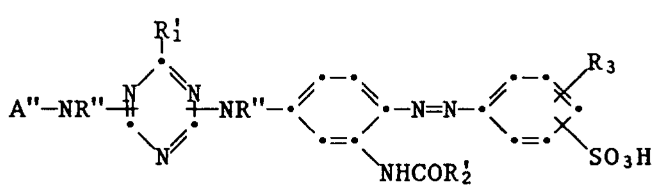
(4)

worin $R_1'$ Chlor, Morpholino, Piperidino, $C_1$-$C_4$-Alkylthio, N-$C_1$-$C_4$-Alkyl-N-phenylamino, unsubstituiertes oder durch Chlor, Methyl, Methoxy und/oder Sulfo substituiertes Phenylamino oder unsubstituiertes oder im Alkylteil durch Hydroxy, Carboxy, Methoxy oder Ethoxy substituiertes N-Mono- oder N,N-Di-$C_1$-$C_4$-Alkylamino bedeutet, $R_2'$ unsubstituiertes oder durch Hydroxy substituiertes $C_1$-$C_3$-Alkyl ist, $R_3$ Wasserstoff, $C_1$-$C_4$-

Alkyl, $C_1$-$C_4$-Alkoxy, Halogen, Hydroxy oder Carboxy bedeutet, R'' Wasserstoff, Methyl oder Ethyl ist und A'' ein Rest der Formel

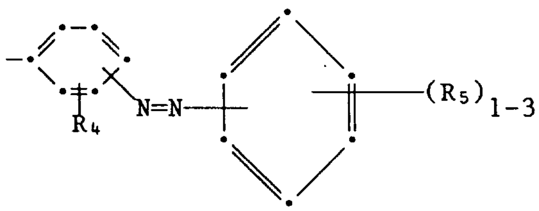

,

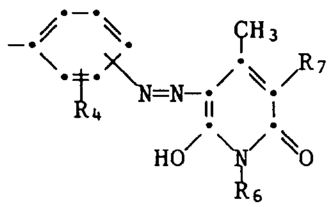

,

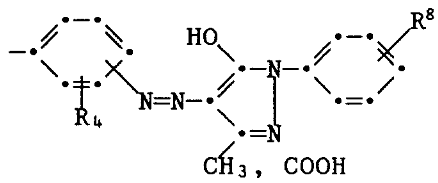

oder

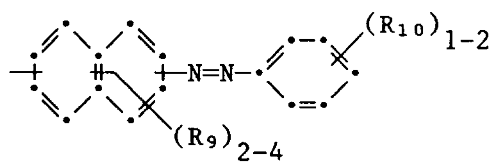

,

worin $R_4$ Wasserstoff, Methyl, Methoxy, Sulfo, Chlor, Acetylamino, Hydroxymethylamino, Propionylamino oder Carboxy ist, $R_5$ für 1 bis 3 gleiche oder verschiedene Reste ausgewählt aus der Gruppe Sulfo, Methyl, Methoxy, Chlor, Hydroxy, Carboxy und o-, m- oder p-Sulfophenylazo steht, $R_6$ Wasserstoff, $C_1$-$C_4$-Alkyl oder $C_1$-$C_4$-Alkoxy-$C_1$-$C_4$-alkyl bedeutet, $R_7$ Sulfomethyl, Cyano oder Carbamoyl ist, $R_8$ Methyl, Methoxy, Chlor, Sulfo oder Carboxy ist, $R_9$ für 2 bis 4 gleiche oder verschiedene Substituenten ausgewählt aus der Gruppe Hydroxy und Sulfo steht und $R_{10}$ 1 oder 2 gleiche oder verschiedene Reste ausgewählt aus der Gruppe Wasserstoff, Methyl, Methoxy, Sulfo, Hydroxy, Amino, Acetylamino und Hydroxyacetylamino bedeutet.

Eine weitere Gruppe von besonders brauchbaren Farbstoffen stellen Verbindungen der zuvor angegebenen Formel (1) dar, worin A und A' identische Reste der zuvor angegebenen Formel (2) sind.

Eine besonders bevorzugte Ausführungsform der vorliegenden Erfindung betrifft dementsprechend Verbindungen der Formel

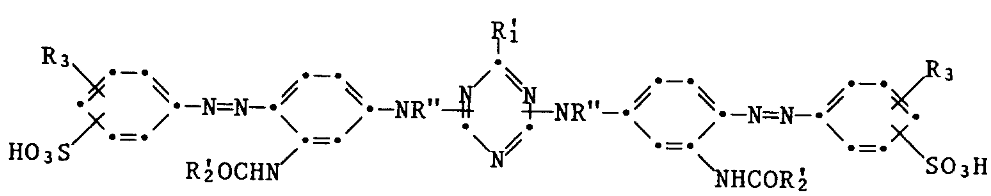

(5),

worin R'', $R_1'$ , $R_2'$ und $R_3$ jeweils die unter der Formel (4) angegebene Bedeutung haben. Von ganz besonderem Interesse sind hierbei Verbindungen der oben angegebenen Formel (5), worin $R_1'$ Morpholino, N-Hydroxy-$C_1$-$C_2$-alkylamino oder N,N-Di-hydroxy-$C_1$-$C_2$-alkylamino bedeutet, $R_2'$ für Methyl, Ethyl oder Hydroxymethyl steht, R'' Wasserstoff ist und $R_3$ Wasserstoff, Methyl, Methoxy oder Chlor bedeutet.

Insbesondere gute färberische Ergebnisse werden erhalten mit Verbindungen der Formel

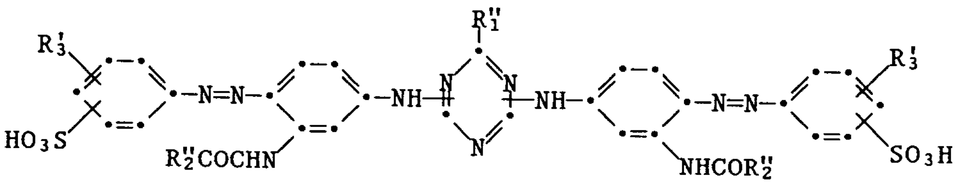

(6),

worin $R_1'$ N,N-Di-β-hydroxyethylamino oder Morpholino ist, $R_2''$ Methyl oder Hydroxymethyl bedeutet und $R_3'$ für Wasserstoff, Methyl oder Methoxy steht.

Das Verfahren zur Herstellung der Verbindungen der Formel (1) ist dadurch gekennzeichnet, dass man eine Triazinverbindung der Formel

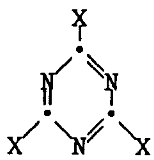

(7)

nacheinander in beliebiger Reihenfolge mit einer Verbindung der Formel

A'-NHR' (8),

einer Verbindung der Formel

A-NHR (8a)

und einer Verbindung der Formel

$R_1$-H (9)

zur Verbindung der Formel (1) umsetzt, wobei für A, A', R, R' und $R_1$ jeweils die zuvor angegebenen Bedeutungen und Bevorzugungen gelten und X Halogen, insbesondere Chlor, ist.

Die Ausgangsverbindungen der Formel (7), (8), (8a) und (9) sind an sich bekannt oder können auf an sich bekannte Weise erhalten werden.

Vorzugsweise setzt man die Trihalogenotriazinverbindung der Formel (7) zunächst mit in etwa stöchiometrischen Mengen einer Aminoazoverbindung der Formel (8) bei einer Temperatur von -5 bis 20 °C, vorzugsweise 0 bis 5 °C um, wobei der pH-Wert durch Zugabe geeigneter Basen, z.B. Ammonium- oder Alkalimetallbasen wie Ammoniak, Lithium-, Natrium- oder Kaliumhydroxid oder -carbonat, neutral bis leicht sauer, vorzugsweise bei 5 bis 6, gehalten wird. Zu dem erhaltenen Reaktionsgemisch werden zweckmässigerweise in etwa stöchiometrische Mengen einer Aminoazoverbindung der Formel (8a) gegeben und diese bei leicht erhöhter Temperatur, vorzugsweise bei 30 bis 50 °C und einem neutralen bis leicht sauren pH-Wert, der vorzugsweise 6 bis 6,5 beträgt, mit dem Triazinderivat zur Reaktion gebracht. Handelt es sich bei den Verbindungen der Formel (8) und (8a) um identische Aminoazoverbindungen, so setzt man ca. 2 Aequivalente dieses Aminoazofarbstoffes mit 1 Aequivalent Triazinverbindung um, wobei die Temperatur vorzugsweise zunächst bei -5 bis 20 °C gehalten und dann auf ca. 30 bis 50 °C erhöht wird.

Eine weitere Möglichkeit besteht darin, die Triazinverbindung der Formel (7) mit einem Gemisch enthaltend sowohl eine Verbindung der Formel (8) als auch eine davon verschiedene Verbindung der Formel (8a) umzusetzen, wobei ein Gemisch von einer asymmetrischen Verbindung der Formel

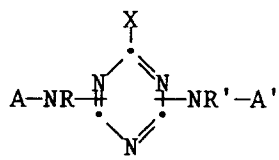

und zwei symmetrischen Verbindungen der Formeln

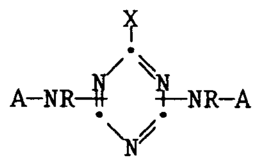

und

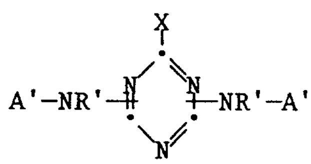

erhalten wird.

Der so erhaltene Triazinylfarbstoff enthält noch ein Halogenatom X, welches durch Reaktion mit einer Verbindung der Formel (9) bei erhöhter Temperatur, vorzugsweise 70 bis 100 °C, und einem neutralen bis leicht alkalischen pH-Wert, der je nach eingesetzter Verbindung der Formel (9) z.B. 7 bis 9 beträgt, in eine beliebige Gruppe $R_1$ umgewandelt werden kann.

Ein weiterer Gegenstand der vorliegenden Erfindung ist die Verwendung der Azofarbstoffe der Formel (1), gegebenenfalls auch Mischungen dieser Verbindungen, zum Färben oder Bedrucken von stickstoffhaltigen und insbesondere hydroxylgruppenhaltigen Fasermaterialien.

Die erfindungsgemässen Azofarbstoffe der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosichen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Neben den textilen Substraten können auch Leder und Papier mit erfindungsgemässen Verbindungen (Farbstoffen) der Formel (1) gefärbt werden.

Man erhält egale Färbungen in gelben Farbtönen mit guten Allgemeinechtheiten, insbesondere guten Reib-, Nass-, Nassreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Die erfindungsgemässen Farbstoffe der Formel (1) sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbebedingungen für Polyesterfasern, d.h. bei Temperaturen im Bereich von etwa 100 bis 150 °C, vorzugsweise von 110 bis 130 °C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff

angefärbt werden. Verwendet man einen Dispersionsfarbstoff mit gleicher Nuance wie der erfindungsgemässe Farbstoff sie aufweist, so ist es auch möglich Ton-in-Ton-Färbungen zu erhalten.

Mit der Bereitstellung der erfindungsgemässen Farbstoffe der Formel (1) kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindunsgemässen Verbindungen der Formel (1) eignen sich auch zur Herstellung von wässrigen Tinten für den Tintenstrahldruck (ink-jet printing).

Aus der DE-A-1,544,425 sind Farbstoffe bekannt, welche im Unterschied zu den erfindungsgemässen Farbstoffen einen Naphthylazophenylrest enthalten.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 17,3 Teile 1-Aminobenzol-3-sulfonsäure werden in 200 Teilen Eis/Wasser-Gemisch und 33 Teilen konz. HCl angeschlämmt und bei 0 bis 5 °C mit 6,95 Teilen Natriumnitrit, gelöst in 20 Teilen Wasser, diazotiert. Der Nitritüberschuss wird anschliessend mit Sulfaminsäure zerstört. Die so hergestellte Lösung der Diazoverbindung wird anschliessend innerhalb von 30 Minuten zu einer Lösung von 16,6 Teilen 3-(Hydroxyacetylamino)-anilin in 100 Teilen Dimethylformamid und 300 Teilen Wasser bei 5-10 °C zugetropft, wobei der pH-Wert durch Zugabe von Natriumacetat bei 5,0 bis 5,5 gehalten wird. Man lässt 1 Stunde nachrühren und filtriert dann den Aminoazofarbstoff ab; dieser wird anschliessend mit 20 % Kochsalzlösung gewaschen und dann getrocknet.

21,4 Teile der so erhaltenen rohen Aminoazoverbindung (entsprechend 14,3 Teile reiner Aminoazoverbindung) werden bei pH 7 in 300 Teilen Wasser gelöst, auf ca. 5 °C gekühlt und anschliessend zu einer Suspension von 3,7 Teilen Cyanurchlorid in 100 Teilen Eis/Wasser-Gemisch gegeben. Man lässt 3 Stunden bei 0-5 °C rühren, erwärmt dann innerhalb von 1 Stunde auf 40 °C und lässt anschliessend weitere 4 Stunden bei 40 bis 50 °C rühren, wobei der pH-Wert während der gesamten Verrührzeit durch Zugabe von Natriumhydroxidlösung auf 6 gehalten wird. Das Produkt wird nach Zugabe von 50 ml Ethanol mit Kochsalz ausgesalzen, abfiltriert und mit Kochsalzlösung gewaschen. Das feuchte Nutschgut wird in warmem Wasser gelöst und anschliessend ausgesalzen, abfiltriert, mit Kochsalzlösung gewaschen und schliesslich getrocknet. Es resultiert der Farbstoff, der in Form der freien Säure der Formel

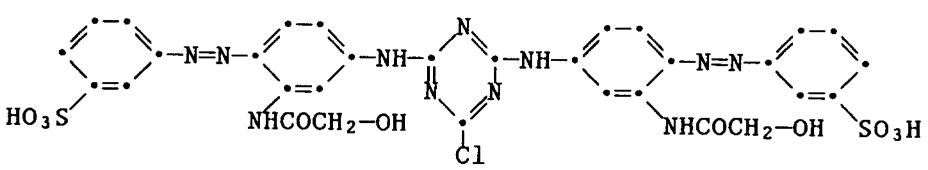

entspricht. Er färbt Baumwolle als Direktfarbstoff in reinen grünstichiggelben Tönen, wobei die erhaltenen Färbungen gute Licht- und Nassechtheitseigenschaften aufweisen. Der Farbstoff eignet sich auch zum Färben von Leder und Papier ($\lambda_{max}$ 382nm).

Beispiel 2: Analog zu Beispiel 1 werden 18,7 Teile 4-Aminotoluol-2-sulfonsäure diazotiert und auf 3-(Hydroxyacetylamino)anilin gekuppelt.

20 Teile des erhaltenen rohen Aminoazofarbstoffes (Gehalt ca. 78 %) werden anschliessend analog zu Beispiel 1 mit 3,9 Teilen Cyanurchlorid kondensiert und feucht isoliert.

Das feuchte Nutschgut wird mit 4,2 Teilen Diethanolamin in 200 Teilen Wasser bei 90-95 °C während 6 Stunden verrührt. Die viskose Suspension wird mit 200 Teilen Ethanol versetzt und das Produkt anschliessend ausgesalzen, abfiltriert und getrocknet.

Es resultiert ein Farbstoff, der in Form der freien Säure der Formel

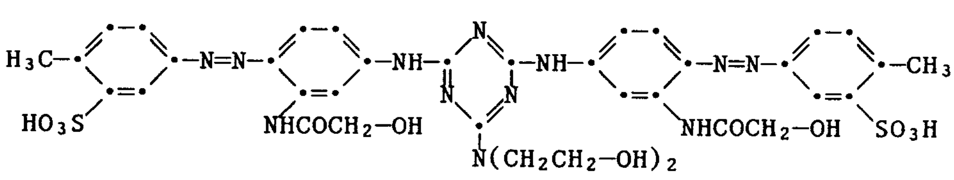

entspricht. Er färbt Baumwolle, vorzugsweise nach dem Ausziehverfahren bei 90 °C oder 130 °C (HT-Bedingungen) ausgefärbt, in reinen gelben Tönen, wobei die erhaltenen Färbungen gute Licht- und Nassechtheitseigenschaften aufweisen ($\lambda_{max}$ 405nm).

Beispiel 3: 5,5 Teile Cyanurchlorid werden in 50 Teilen Aceton gelöst und anschliessend mit 300 Teilen Eis/Wasser-Gemisch versetzt. Dazu gibt man eine Lösung von 9,2 Teilen des Aminoazofarbstoffes der Formel

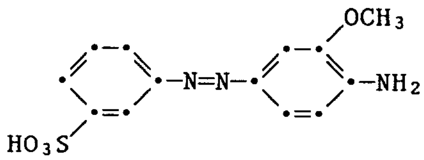

(10)

in 200 Teilen Wasser bei pH 7. Man lässt anschliessend 3 Stunden bei 0-5 °C rühren, wobei der pH-Wert durch Zugabe von Natriumhydroxidlösung bei 6,0 gehalten wird.
Anschliessend werden 10,9 Teile des Aminoazofarbstoffes der Formel

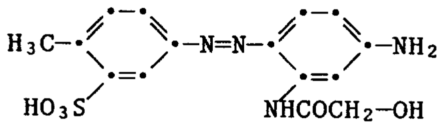

,

gelöst in 200 Teilen Wasser, bei pH 7 zur Reaktionsmasse gegeben. Man lässt 6 Stunden bei einer Temperatur von 40 bis 45 °C rühren und hält den pH-Wert durch Zugabe von Natriumhydroxidlösung bei 7,0. Anschliessend werden 6,5 Teile Diethanolamin zugegeben und das Reaktionsgemisch auf ca. 90 °C erhitzt. Man lässt 6 Stunden bei 90 °C rühren, kühlt dann auf 40 °C ab und fällt den Farbstoff mit Kochsalz und Ethanol aus. Das Produkt wird abfiltriert, nochmals heiss in Wasser gelöst, geklärt und nach Zugabe von ca. 10 Vol.-% Ethanol ausgesalzen. Der Farbstoff wird abfiltriert, mit Kochsalz gewaschen und getrocknet, er entspricht in Form der freien Säure der Formel

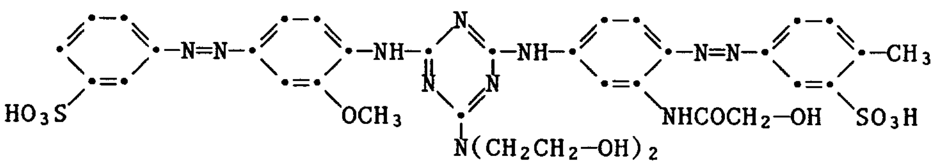

Der Farbstoff färbt Baumwolle in reinen gelben Tönen, wobei die erhaltenen Färbungen gute Licht- und Nassechtheitseigenschaften besitzen ($\lambda_{max}$ 402nm).

Beispiele 4-8: Verfährt man wie im Beispiel 3 beschrieben und setzt anstelle des Aminoazofarbstoffes der Formel (10) die äquivalente Menge einer der in der folgenden Tabelle genannten Farbstoffe ein, so erhält man ebenfalls wertvolle Farbstoffe, die Baumwolle in einer gelben Nuance mit guten Allgemeinheiten färben:

Tabelle

| Beispiel | Aminoazofarbstoff |
|---|---|
| 4 | 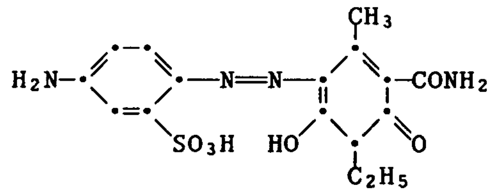 |
| 5 | 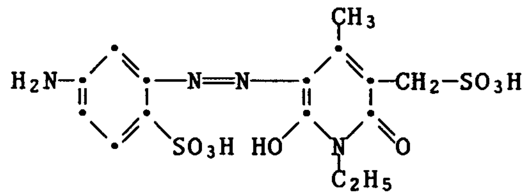 |
| 6 | 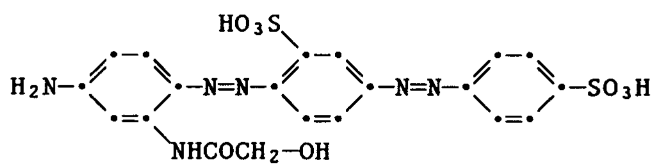 |
| 7 | 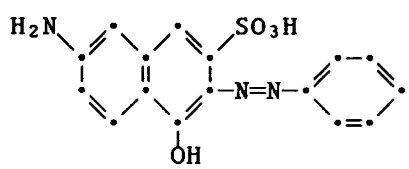 |
| 8 | 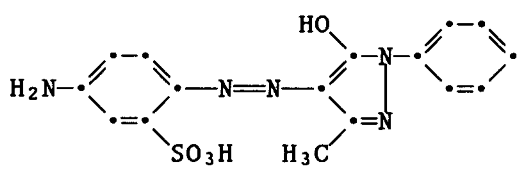 |

Beispiel 9: 19,2 Teile des gemäss Beispiel 1 erhaltenen Farbstoffes (Salzgehalt ca. 37 %) werden in 200 Teilen Wasser verrührt. Nach der Zugabe von 2,0 Teilen Morpholin wird das Reaktionsgemisch erwärmt und 4 Stunden bei 90 °C gerührt, wobei der pH-Wert des Reaktionsgemisches durch Zugabe von 1N-Natriumhydroxidlösung oberhalb von 7,5 gehalten wird. Das Reaktionsgemisch wird dann auf ca. 70 °C abgekühlt, 30 Teile Ethanol zugegeben und das Produkt ausgesalzen. Nach dem Abfiltrieren wird das Nutschgut mit Kochsalzlösung gewaschen und dann getrocknet. Es resultiert der Farbstoff, der in Form der freien Säure der Formel

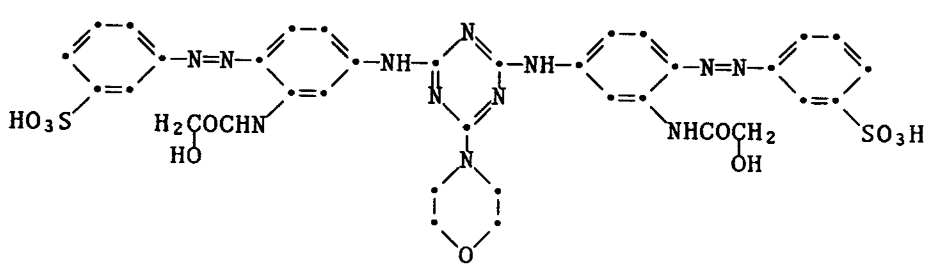

entspricht. Er färbt Baumwolle, Papier und Leder in reinen gelben Tönen, wobei die Färbungen gute Allgemeinechtheiten und insbesondere eine gute Lichtechtheit aufweisen ($\lambda_{max}$ 405nm).

Beispiel 10: 3,9 Teile 2,4-Dichlor-6-methylthio-1,3,5-triazin werden in 70 Teilen Aceton gelöst und mit 150 Teilen Eiswasser versetzt. Zu dieser Suspension gibt man eine Anschlämmung von 14,2 Teilen 4-Amino-2-acetylamino-azobenzol-3'-sulfonsäure (Natriumsalz) in 800 Teilen Wasser. Unter Konstanthalten des pH-Wertes bei 6,5 mittels 1N-Natriumhydroxidlösung wird zunächst 1 Stunde bei 0 bis 5°C, dann 1 Stunde bei 10 bis 15°C, in der Folge 6 Stunden bei 30 bis 40°C, 2 Stunden bei 60 bis 70°C und schliesslich 4 Stunden bei 85°C gerührt. Nach dem Abkühlen auf ca. 60°C werden 100 Teile Ethanol zugegeben und anschliessend der Farbstoff mit Kochsalz ausgesalzen, filtriert und mit Kochsalzlösung gewaschen. Der Farbstoff entspricht in Form der freien Säure der Formel

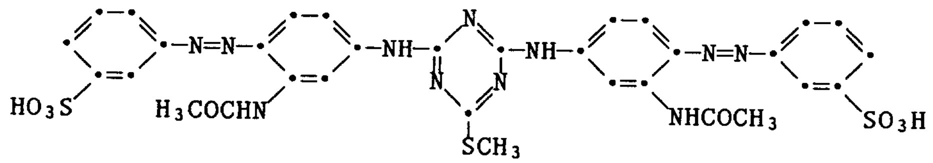

und färbt Baumwolle in reinen gelben Tönen mit guter Lichtechtheit ($\lambda_{max}$ 397nm).

Beispiele 11-74: Analog wie in den Beispielen 1 bis 3, 9 und 10 beschrieben lassen sich die in der Tabelle 1 aufgelisteten Farbstoffe herstellen, die Cellulosematerialien und Leder in der angegebenen Nuance mit guten Allgemeinechtheiten färben:

Tabelle 1

| Bsp.Nr. | Farbstoff | $\lambda_{max}$ [nm] | Nuance auf Baumwolle (gebleicht/merc.) |
|---|---|---|---|
| 11 | 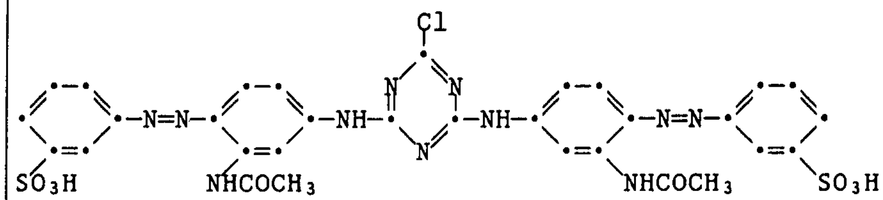 | 370 | gelb |
| 12 | 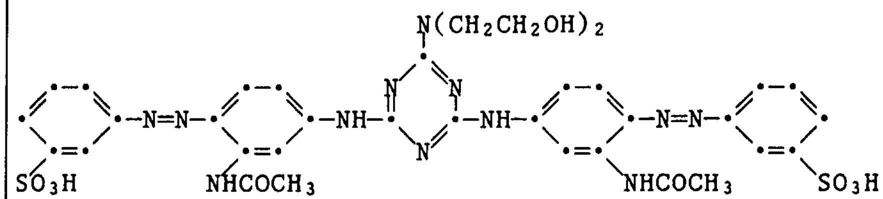 | 405 | gelb |
| 13 | 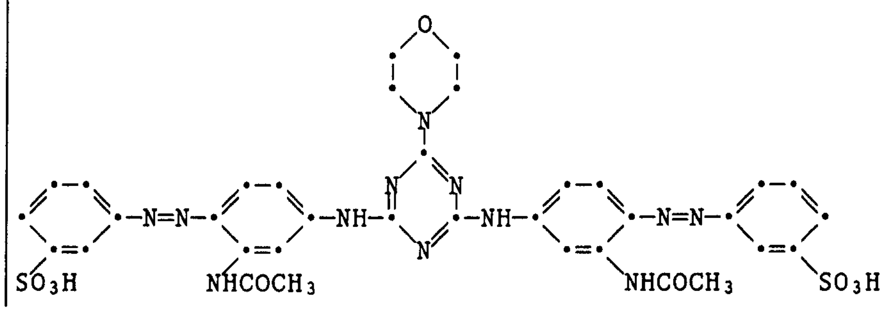 | 406 | gelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 14 | 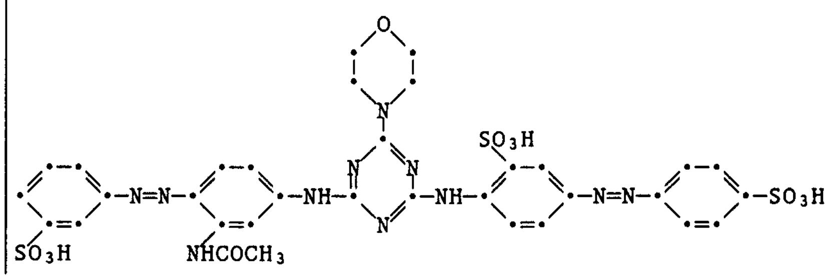 | 384 | gelb, grünstichig |

Tabelle 1 Fortsetzung

| Bsp.Nr. | Farbstoff | $\lambda_{max}$ [nm] | Nuance auf Baumwolle (gebleicht/merc.) |
|---|---|---|---|
| 15 | 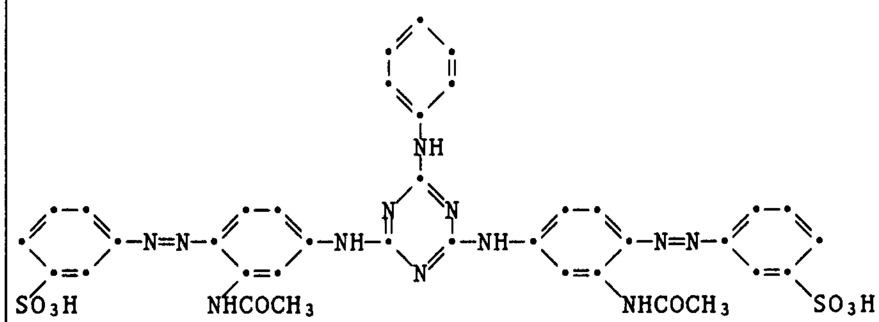 | 402 | gelb |
| 16 | 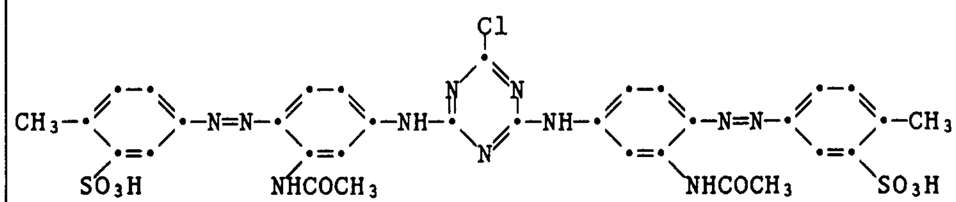 | 372 | gelb |
| 17 | 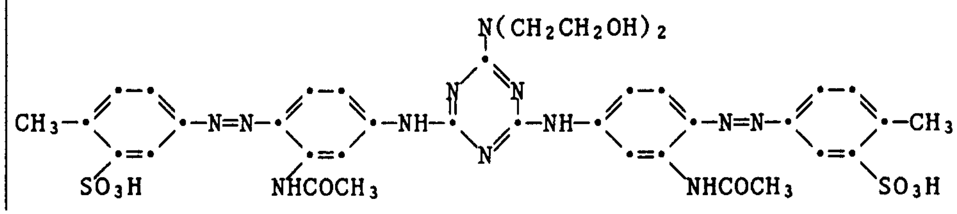 | 407 | gelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 18 | 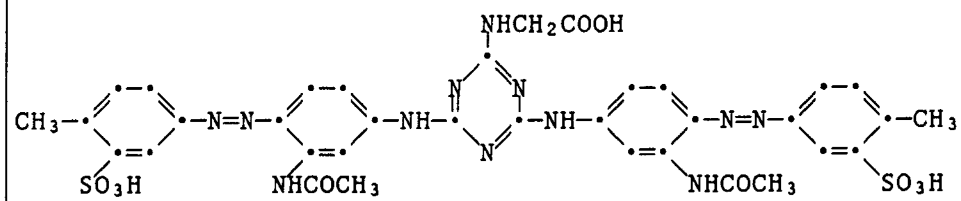 | 381 | gelb |
| 19 | 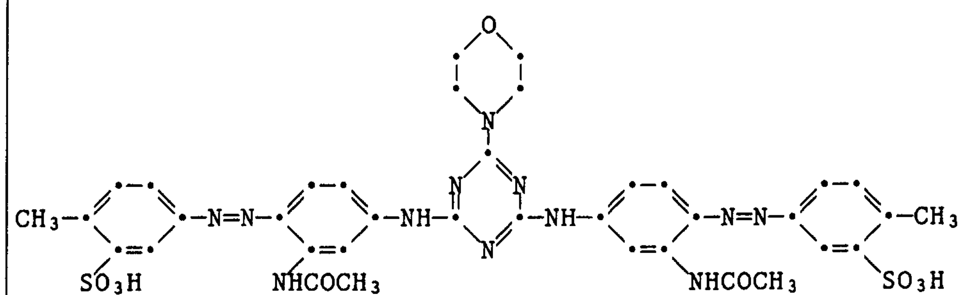 | 407 | gelb |
| 20 | 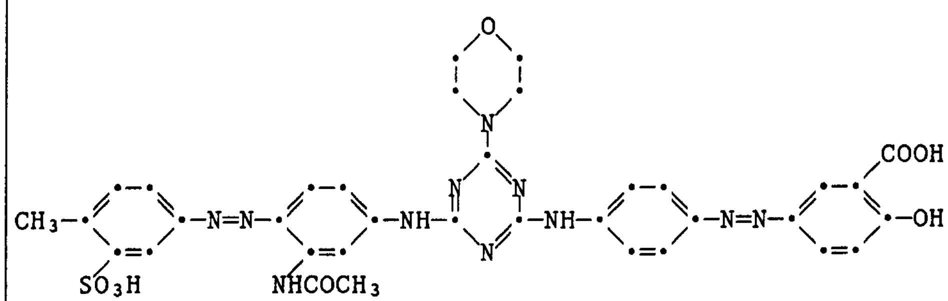 | 399 | gelb, grünstichig |

Tabelle 1 Fortsetzung

| Bsp.Nr. | Farbstoff | $\lambda_{max}$ [nm] | Nuance auf Baumwolle (gebleicht/merc.) |
|---|---|---|---|
| 21 | 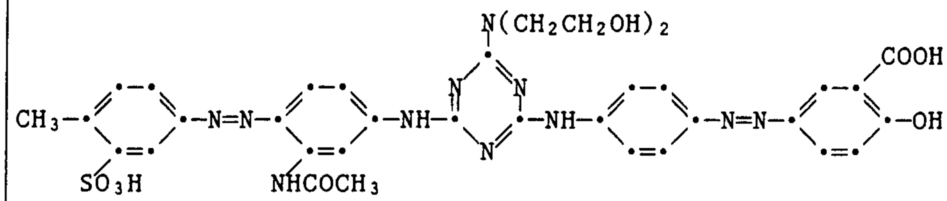 | 386 | gelb, grünstichig |
| 22 | 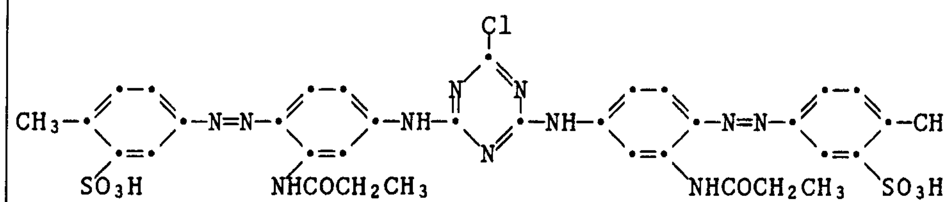 | 379 | gelb |
| 23 | 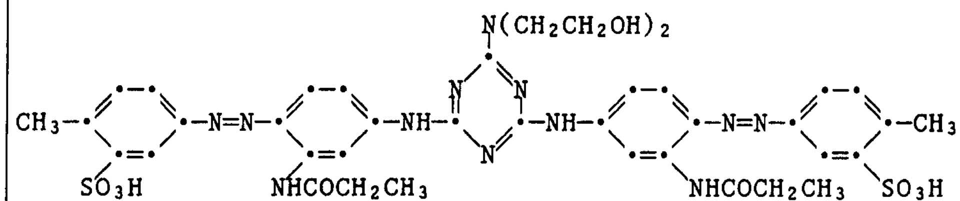 | 407 | gelb |
| 24 | 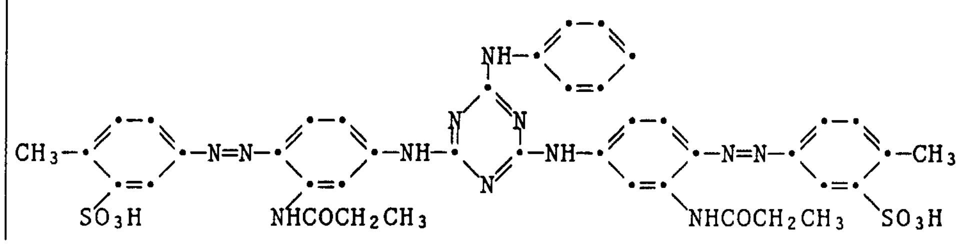 | 406 | gelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 25 | 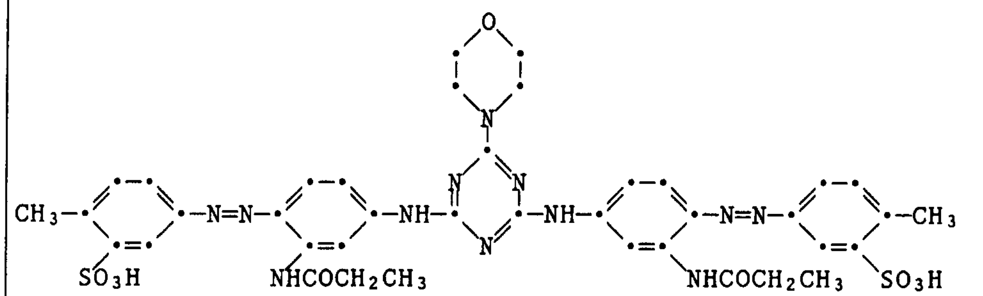 | 412 | gelb |
| 26 | 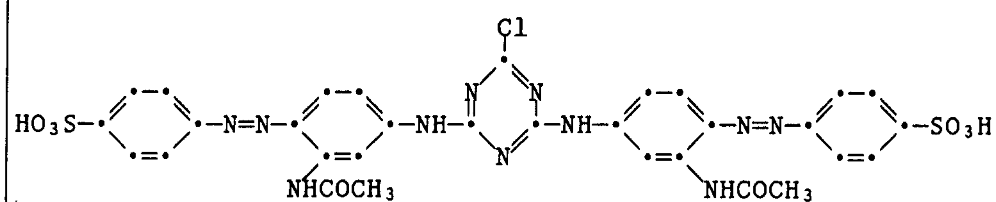 | 374 | goldgelb |
| 27 | 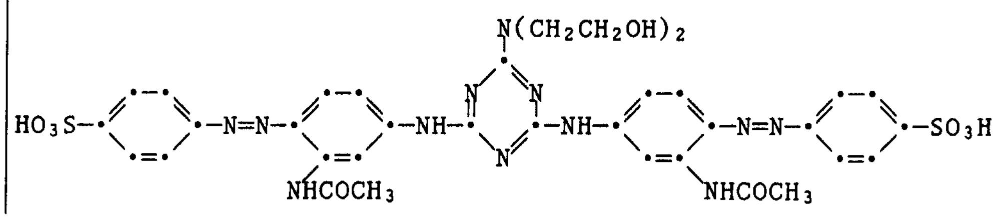 | 407 | goldgelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 28 | 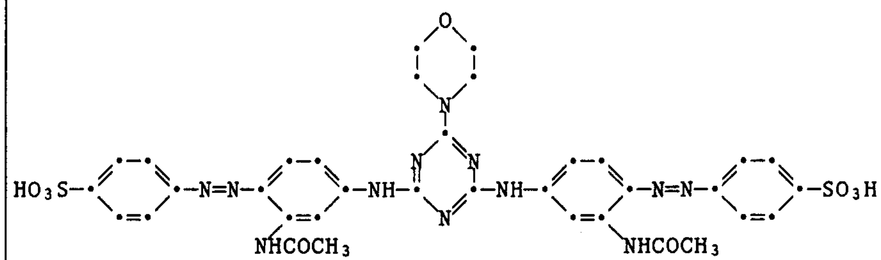 | 403 | goldgelb |
| 29 | 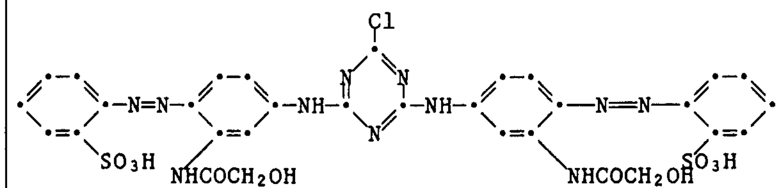 | 398 | goldgelb |
| 30 | 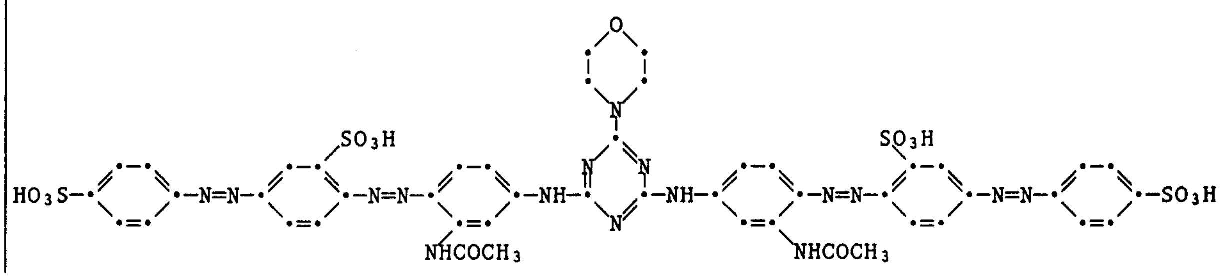 | 460 | orange-braun |

Tabelle 1 Fortsetzung

| Bsp.Nr. | Farbstoff | $\lambda_{max}$ [nm] | Nuance auf Baumwolle (gebleicht/ merc.) |
|---|---|---|---|
| 31 | 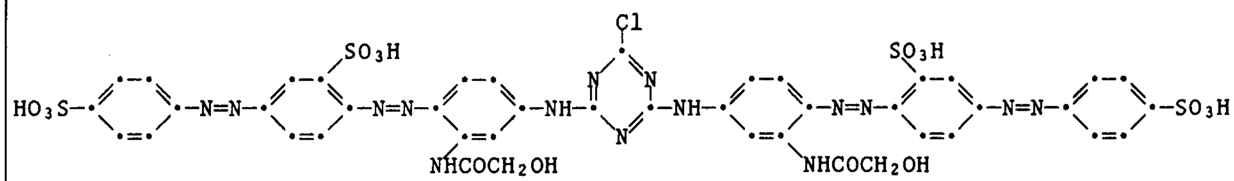 | 447 | orange-braun |
| 32 | 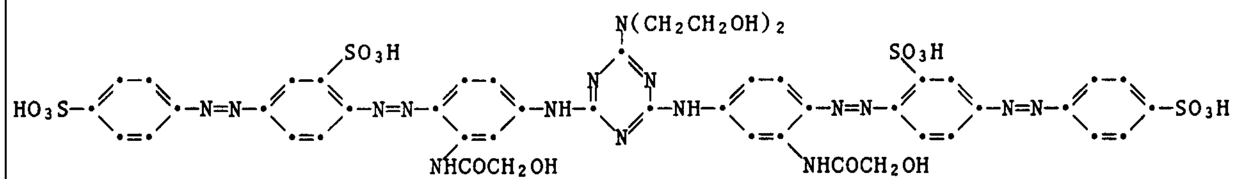 | 461 | orange-braun |
| 33 | 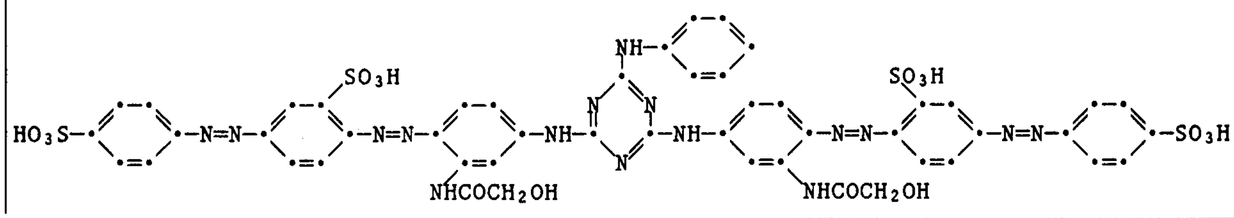 | 447 | orange-braun |

Tabelle 1 Fortsetzung

| Bsp.Nr. | Farbstoff | $\lambda_{max}$ [nm] | Nuance auf Baumwolle (gebleicht/merc.) |
|---|---|---|---|
| 34 | 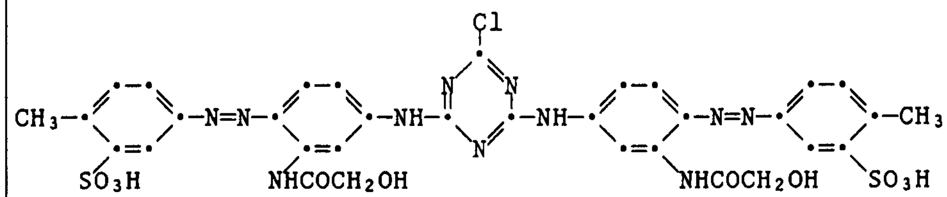 | 382 | gelb |
| 35 | 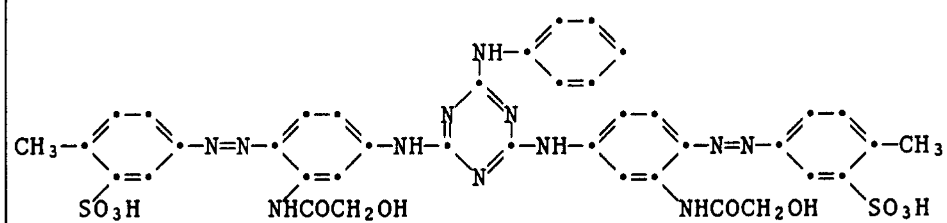 | 399 | gelb |
| 36 | 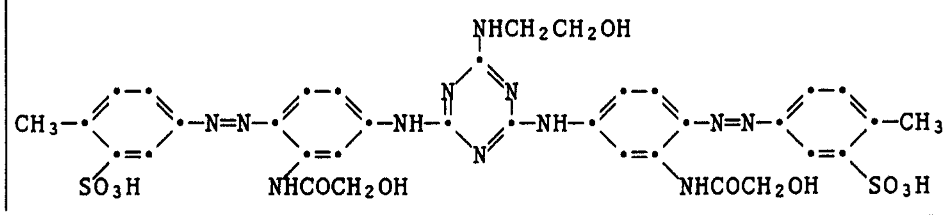 | 372 | gelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 37 | 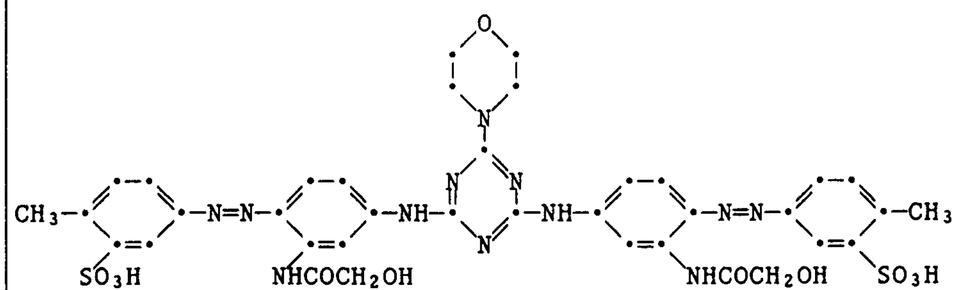 | 407 | gelb |
| 38 | 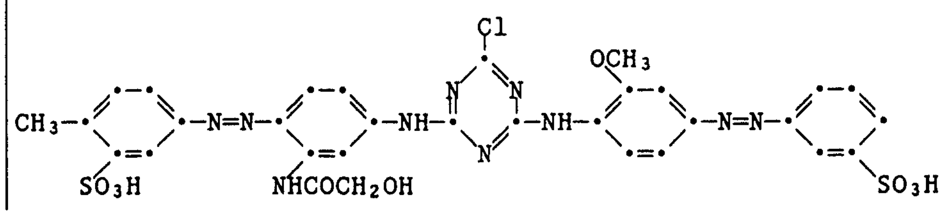 | 379 | gelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 39 | 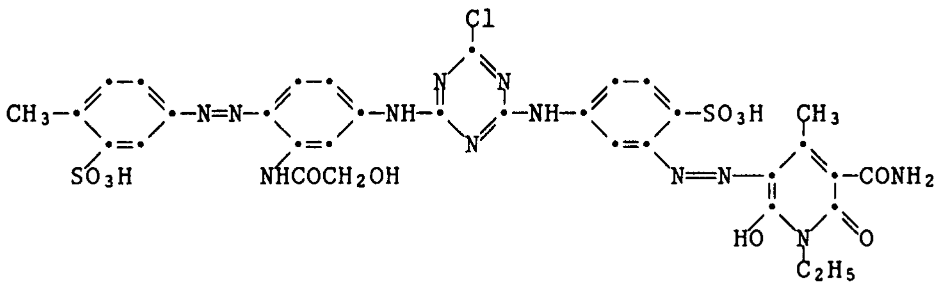 | 397 | gelb grünstichig |
| 40 | 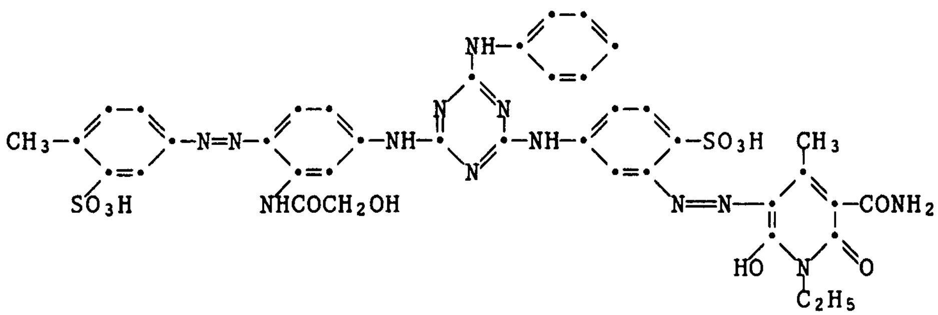 | 401 | gelb grünstichig |
| 41 | 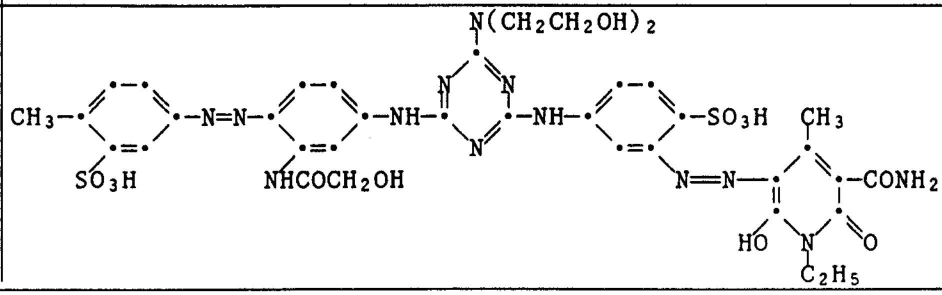 | 401 | gelb grünstichig |

Tabelle 1 Fortsetzung

| Bsp.Nr. | Farbstoff | $\lambda_{max}$ [nm] | Nuance auf Baumwolle (gebleicht/merc.) |
|---|---|---|---|
| 42 | 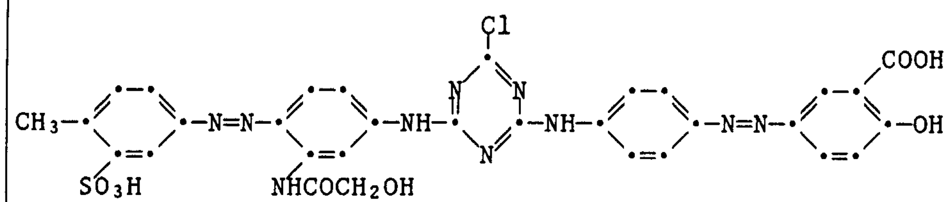 | 360 | gelb grünstichig |
| 43 | 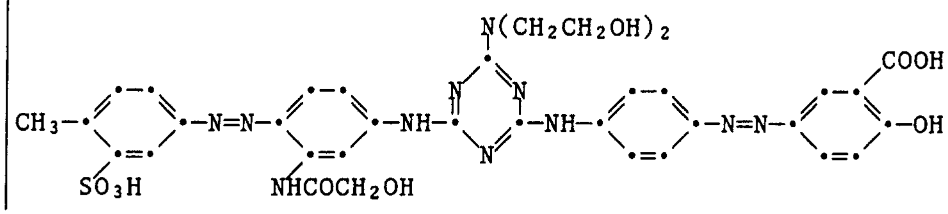 | 395 | gelb grünstichig |

Tabelle 1 Fortsetzung

| Bsp.Nr. | Farbstoff | $\lambda_{max}$ [nm] | Nuance auf Baumwolle (gebleicht/merc.) |
|---|---|---|---|
| 44 | 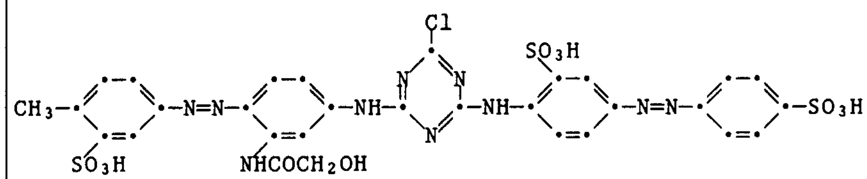 | 362 | gelb grünstichig |
| 45 | 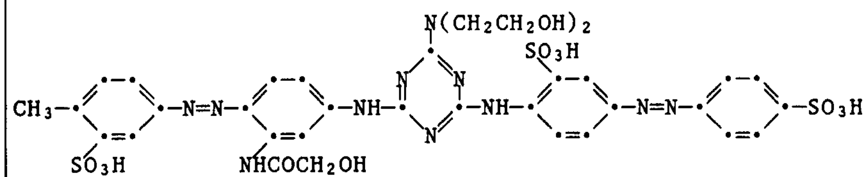 | 390 | gelb grünstichig |
| 46 | 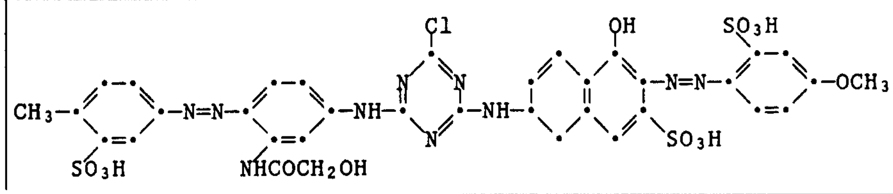 | 399/505 | Brillantorange rotstichig |

<u>Tabelle 1</u> Fortsetzung

| Bsp.Nr. | Farbstoff | $\lambda_{max}$ [nm] | Nuance auf Baumwolle (gebleicht/merc.) |
|---|---|---|---|
| 47 | 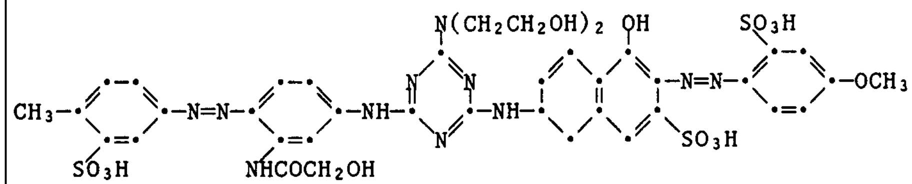 | 413/502 | Brillantorange rotstichig |
| 48 | 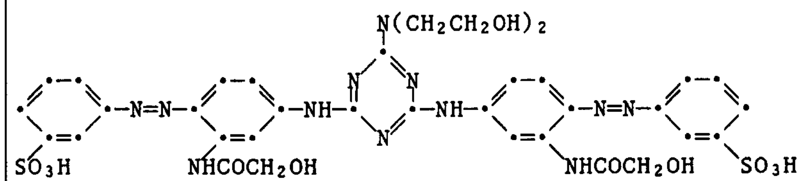 | 407 | gelb |
| 49 | 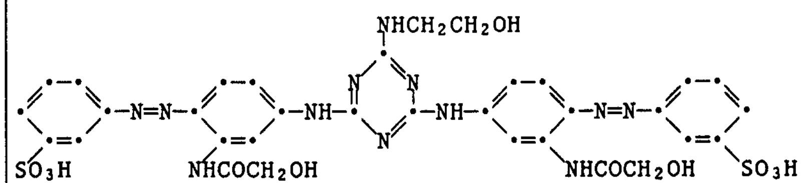 | 403 | gelb |
| 50 | 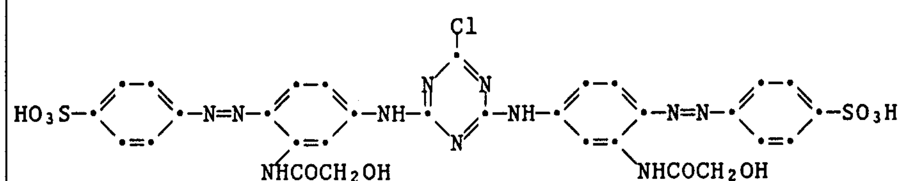 | 380 | goldgelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 51 | 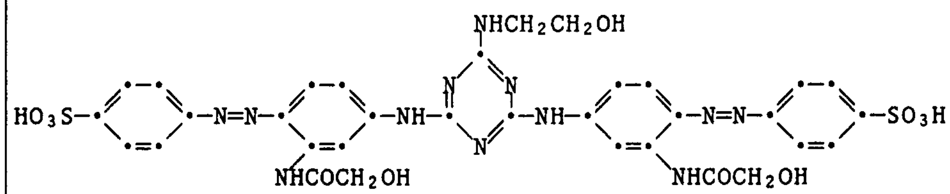 | 416 | goldgelb |
| 52 | 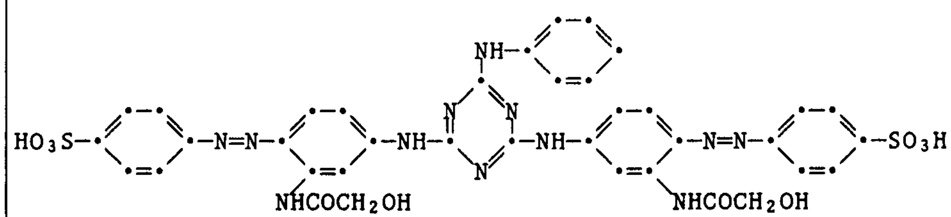 | 403 | goldgelb |
| 53 | 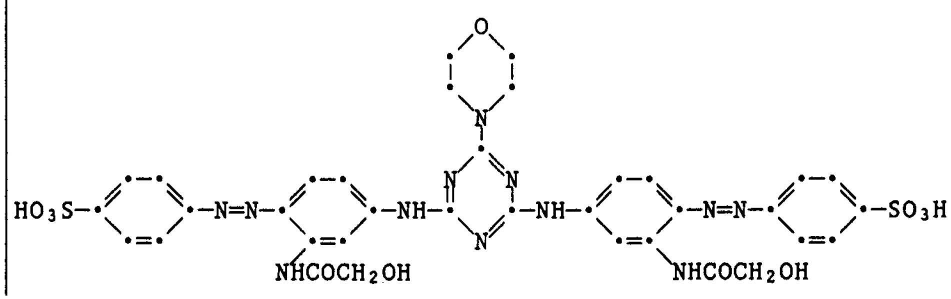 | 416 | goldgelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 54 | 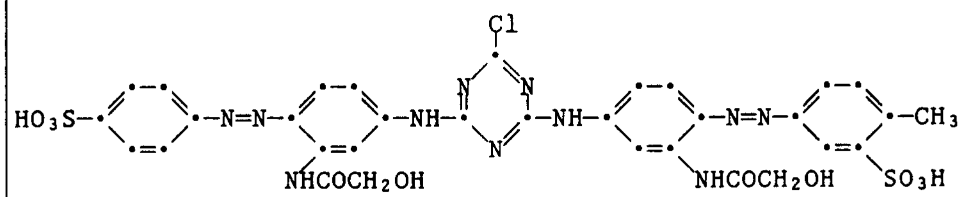 | 403 | gelb |
| 55 | 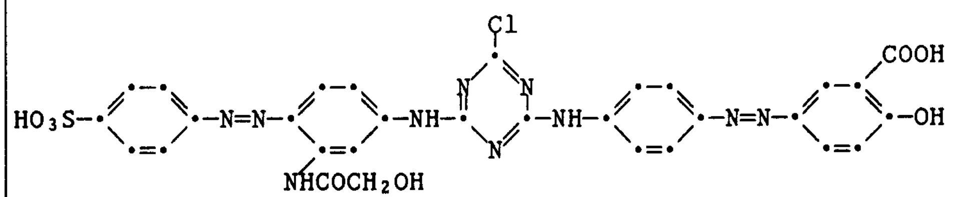 | 362 | gelb |
| 56 | 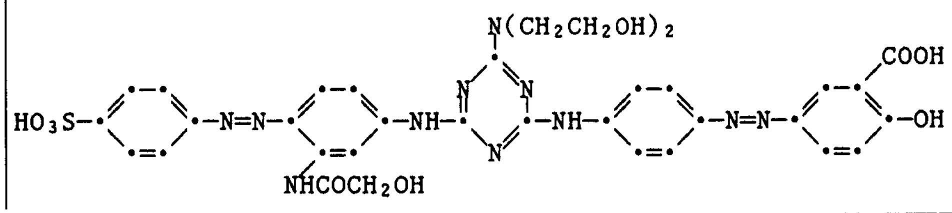 | 385 | gelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 57 | 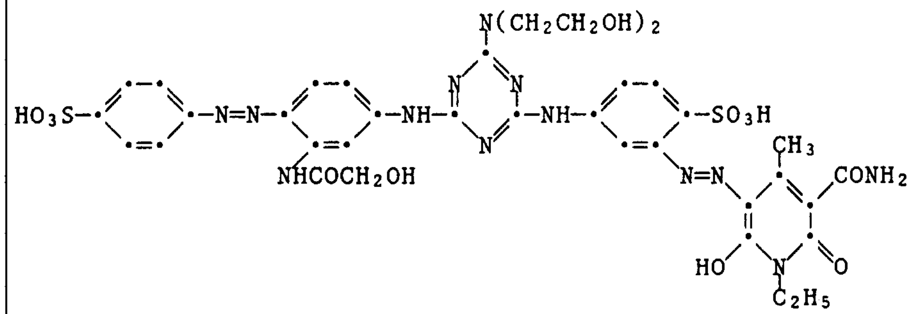 | 422 | gelb |
| 58 | 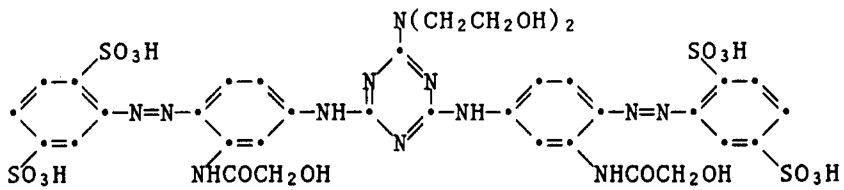 | 413 | goldgelb |
| 59 | 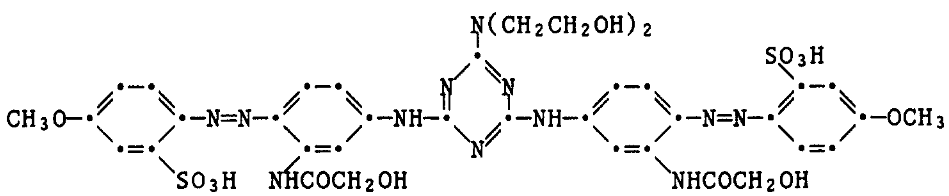 | 417 | goldgelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 60 | 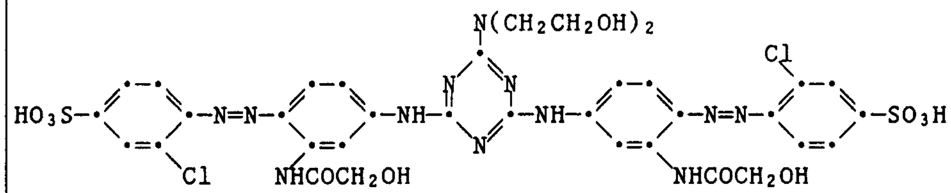 | 401 | goldgelb-orange |
| 61 | 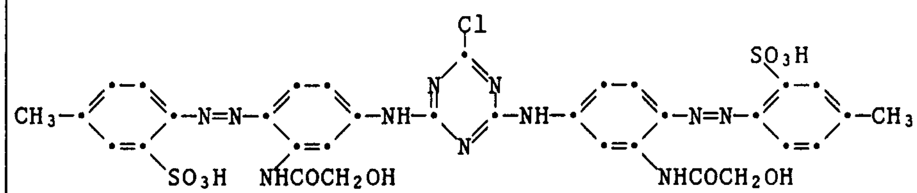 | 391 | goldgelb |
| 62 | 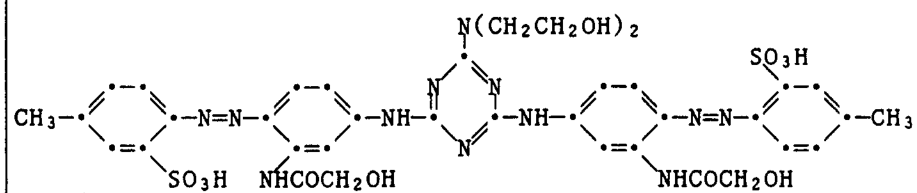 | 402 | goldgelb |
| 63 | 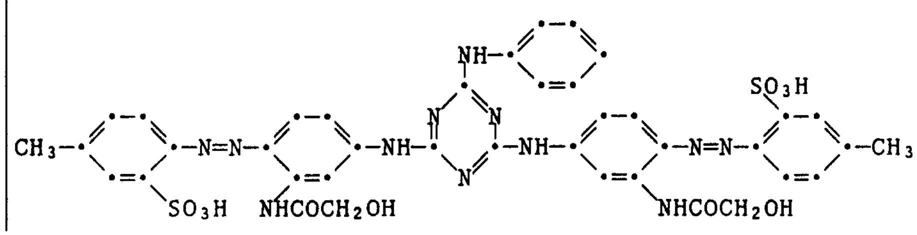 | 401 | goldgelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 64 | 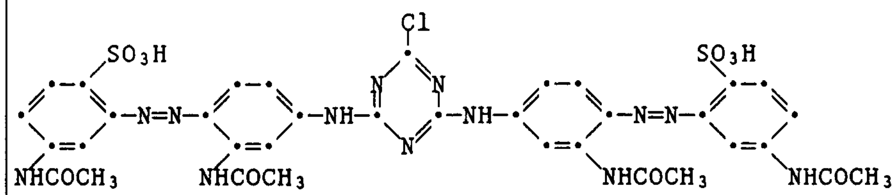 | 384 | goldgelb |
| 65 | 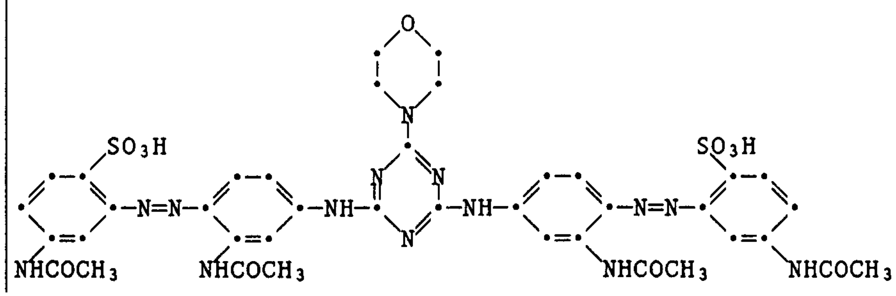 | 414 | goldgelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 66 | 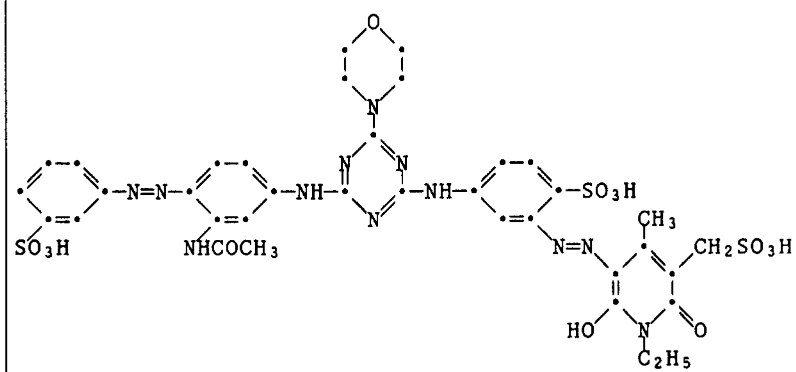 | 411 | grünstichig gelb |
| 67 | 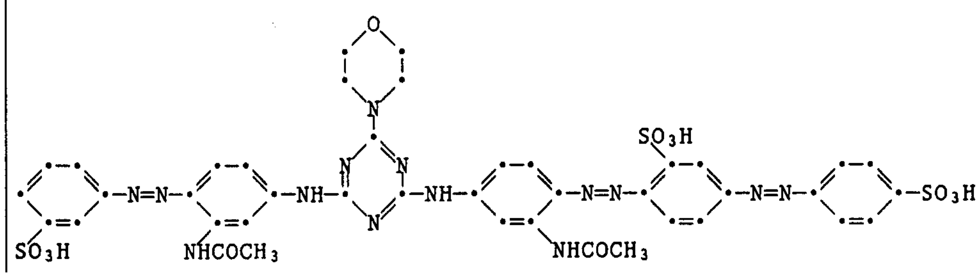 | 412/450 | orange |

Tabelle 1 Fortsetzung

| Bsp.Nr. | Farbstoff | $\lambda_{max}$ [nm] | Nuance auf Baumwolle (gebleicht/merc.) |
|---|---|---|---|
| 68 | 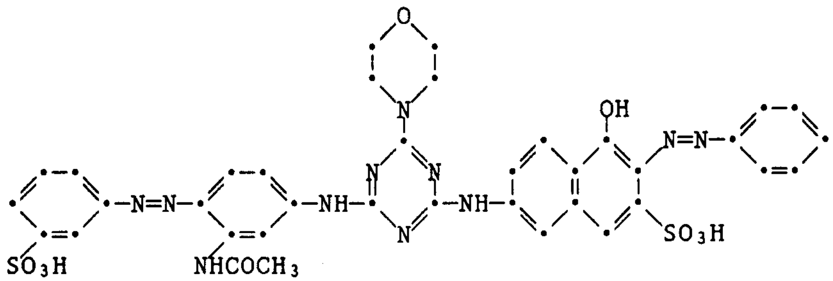 | 450 | orange |
| 69 | 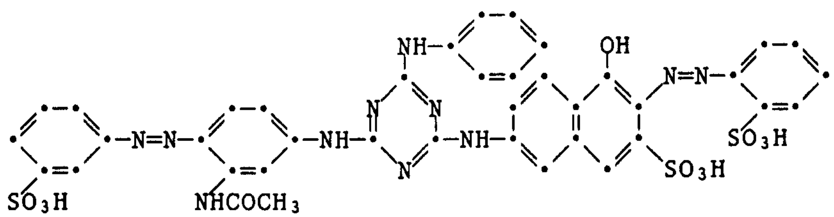 | 443 | orange |
| 70 | 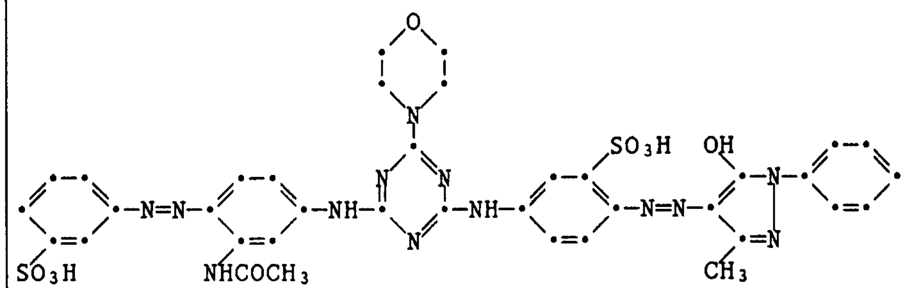 | 417 | gelb |

Tabelle 1 Fortsetzung

| Bsp.Nr. | Farbstoff | $\lambda_{max}$ [nm] | Nuance auf Baumwolle (gebleicht/merc.) |
|---|---|---|---|
| 71 | 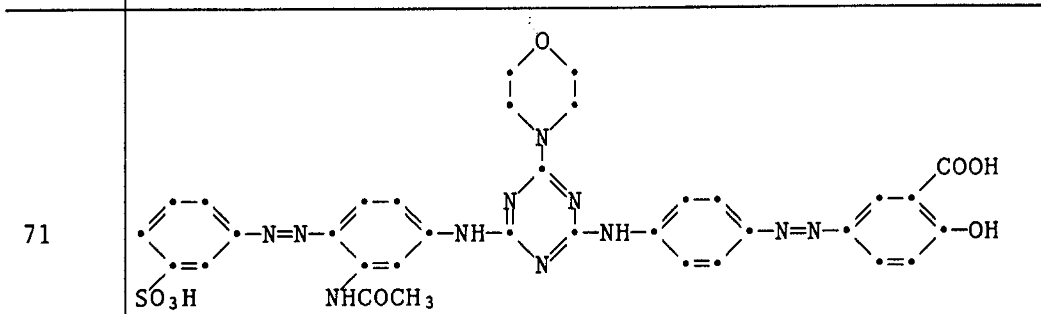 | 392 | gelb grünstichig |
| 72 | 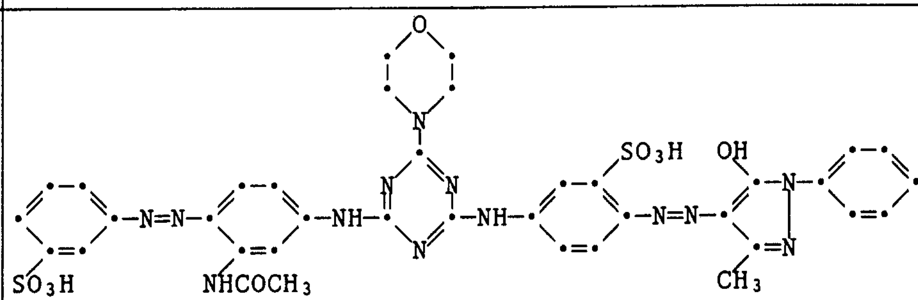 | 412 | gelb grünstichig |

Tabelle 1

| Bsp.Nr. | Farbstoff | $\lambda_{max}$ [nm] | Nuance auf Baumwolle (gebleicht/merc.) |
|---|---|---|---|
| 73 | 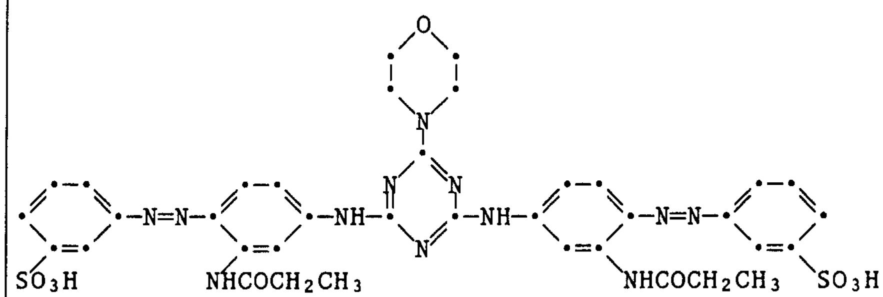 | 406 | gelb |
| 74 | 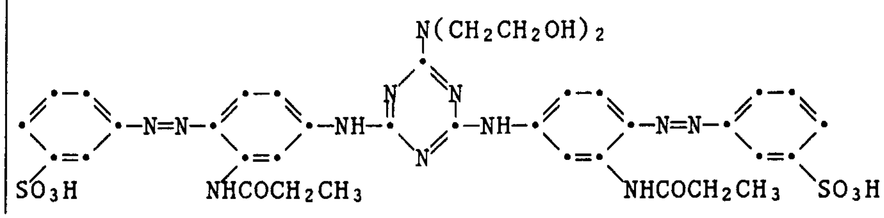 | 405 | gelb |

## Patentansprüche

## Patentansprüche für folgende Vertragsstaaten : BE, CH, DE, FR, GB, IT, LI

1. Verbindungen der Formel

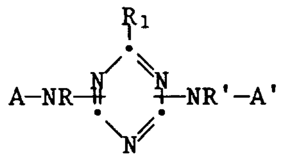

(1),

worin A ein Rest der Formel

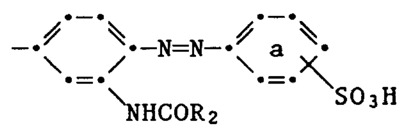

(2)

ist, A' die Bedeutung von A hat oder für einen von A verschiedenen Rest der Formel

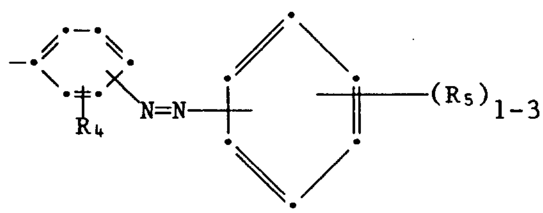

,

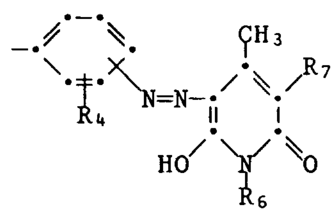

,

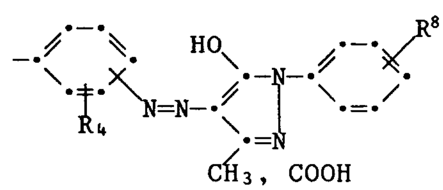

oder

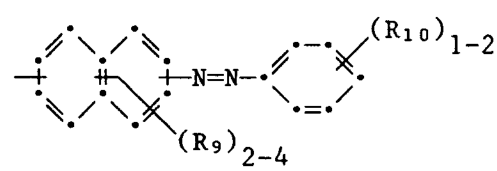

,

worin $R_4$ Wasserstoff, Methyl, Methoxy, Sulfo, Chlor, Acetylamino, Hydroxymethylamino, Propionylamino oder Carboxy ist, $R_5$ für 1 bis 3 gleiche oder verschiedene Reste ausgewählt aus der Gruppe Sulfo, Methyl, Methoxy, Chlor, Hydroxy, Carboxy und o-, m- oder p-Sulfophenylazo steht, $R_6$ Wasserstoff, $C_1$-$C_4$-Alkyl oder $C_1$-$C_4$-Alkoxy-$C_1$-$C_4$-alkyl bedeutet, $R_7$ Sulfomethyl, Cyano oder Carbamoyl ist, $R_8$ Wasserstoff, Methyl, Methoxy, Chlor, Sulfo oder Carboxy ist, $R_9$ für 2 bis 4 gleiche oder verschiedene Substituenten ausgewählt aus der Gruppe Hydroxy und Sulfo steht und $R_{10}$ 1 oder 2 gleiche oder verschiedene Reste ausgewählt aus der Gruppe Wasserstoff, Methyl, Methoxy, Sulfo, Hydroxy, Amino,

Acetylamino und Hydroxyacetylamino bedeutet, steht, R und R' unabhängig voneinander Wasserstoff oder gegebenenfalls substituiertes $C_1$-$C_4$-Alkyl bedeuten, $R_1$ Hydroxy, $C_1$-$C_4$-Alkoxy, Halogen, $C_1$-$C_4$-Alkylthio, Amino, unsubstituiertes oder im Alkylteil durch Hydroxy, Carboxy oder $C_1$-$C_4$-Alkoxy substituiertes N-Mono-oder N,N-Di-$C_1$-$C_4$-Alkylamino, Cyclohexylamino, unsubstituiertes oder im Phenylteil durch $C_1$-$C_4$-Alkyl, $C_1$-$C_4$-Alkoxy, Carboxy, Sulfo und/oder Halogen substituiertes Phenylamino oder N-$C_1$-$C_4$-Alkyl-N-phenylamino, Morpholino, Piperidino oder 3-Carboxy- oder 3-Carbonamidopyridin-1-yl bedeutet, $R_2$ für gegebenenfalls substituiertes $C_1$-$C_4$-Alkyl steht und der Phenylrest (a) gegebenenfalls weitersubstituiert ist.

**2.** Verbindungen gemäss Anspruch 1, dadurch gekennzeichnet, dass R und R' jeweils Wasserstoff bedeuten.

**3.** Verbindungen gemäss Anspruch 1, dadurch gekennzeichnet, dass $R_1$ unsubstituiertes oder im Alkylteil durch Hydroxy, Carboxy, Methoxy oder Ethoxy substituiertes N-Mono- oder N,N-Di-$C_1$-$C_4$-Alkylamino, unsubstituiertes oder im Phenylteil durch Chlor, Methyl, Methoxy und/oder Sulfo substituiertes Phenylamino, N-$C_1$-$C_4$-Alkyl-N-phenylamino, $C_1$-$C_4$-Alkylthio, Chlor, Morpholino oder Piperidino bedeutet.

**4.** Verbindungen gemäss Anspruch 3, dadurch gekennzeichnet, dass $R_1$ Morpholino oder einen unsubstituierten oder im Alkylteil durch Hydroxy, Methoxy oder Ethoxy substituierten N-Mono- oder N,N-Di-$C_1$-$C_4$-Alkylaminorest bedeutet.

**5.** Verbindungen gemäss Anspruch 4, dadurch gekennzeichnet, dass $R_1$ für den Morpholino- oder den N,N-Di-$\beta$-hydroxyethylaminorest steht.

**6.** Verbindungen gemäss einem der Ansprüche 1 bis 5, dadurch gekennzeichnet, dass $R_2$ unsubstituiertes oder durch Hydroxy substituiertes $C_1$-$C_3$-Alkyl bedeutet.

**7.** Verbindungen gemäss Anspruch 6, dadurch gekennzeichnet, dass $R_2$ für den Methyl- oder Hydroxymethylrest steht.

**8.** Verbindungen gemäss einem der Ansprüche 1 bis 7, dadurch gekennzeichnet, dass der Phenylrest (a) keine weiteren Substituenten enthält oder durch $C_1$-$C_4$-Alkyl, $C_1$-$C_4$-Alkoxy, Halogen, Hydroxy, Carboxy, Sulfo, -NHCOR$_2$ oder Arylazo weitersubstituiert ist und $R_2$ die im Anspruch 1 angegebene Bedeutung hat.

**9.** Verbindungen gemäss einem der Ansprüche 1 bis 8, dadurch gekennzeichnet, dass der Phenylrest (a) keine weiteren Substituenten enthält oder durch $C_1$-$C_4$-Alkyl, $C_1$-$C_4$-Alkoxy, Halogen, Hydroxy und/oder Carboxy weitersubstituiert ist.

**10.** Verbindungen gemäss Anspruch 1 der Formel

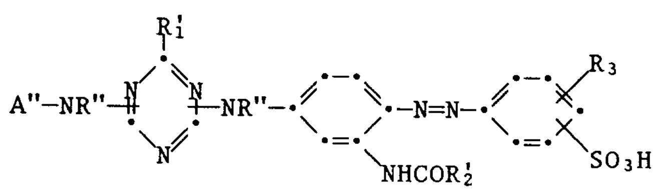

(4)

worin $R_1'$ Chlor, Morpholino, Piperidino, $C_1$-$C_4$-Alkylthio, N-$C_1$-$C_4$-Alkyl-N-phenylamino, unsubstituiertes oder durch Chlor, Methyl, Methoxy und/oder Sulfo substituiertes Phenylamino oder unsubstituiertes oder im Alkylteil durch Hydroxy, Carboxy, Methoxy oder Ethoxy substituiertes N-Mono- oder N,N-Di-$C_1$-$C_4$-Alkylamino bedeutet, $R_2'$ unsubstituiertes oder durch Hydroxy substituiertes $C_1$-$C_3$-Alkyl ist, $R_3$ Wasserstoff, $C_1$-$C_4$-Alkyl, $C_1$-$C_4$-Alkoxy, Halogen, Hydroxy oder Carboxy bedeutet, R'' Wasserstoff, Methyl oder Ethyl ist und A'' ein Rest der Formel

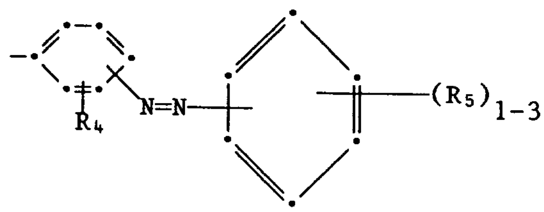

,

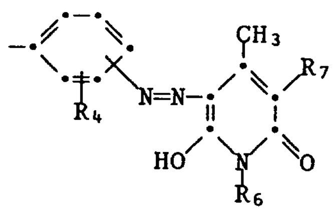

,

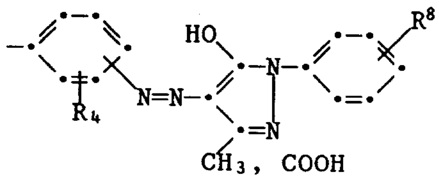

oder

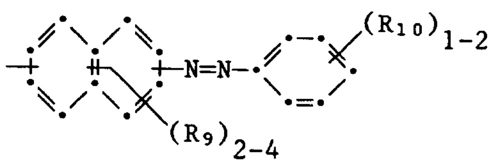

,

worin $R_4$ Wasserstoff, Methyl, Methoxy, Sulfo, Chlor, Acetylamino, Hydroxymethylamino, Propionylamino oder Carboxy ist, $R_5$ für 1 bis 3 gleiche oder verschiedene Reste ausgewählt aus der Gruppe Sulfo, Methyl, Methoxy, Chlor, Hydroxy, Carboxy und o-, m- oder p-Sulfophenylazo steht, $R_6$ Wasserstoff, $C_1$-$C_4$-Alkyl oder $C_1$-$C_4$-Alkoxy-$C_1$-$C_4$-alkyl bedeutet, $R_7$ Sulfomethyl, Cyano oder Carbamoyl ist, $R_8$ Methyl, Methoxy, Chlor, Sulfo oder Carboxy ist, $R_9$ für 2 bis 4 gleiche oder verschiedene Substituenten ausgewählt aus der Gruppe Hydroxy und Sulfo steht und $R_{10}$ 1 oder 2 gleiche oder verschiedene Reste ausgewählt aus der Gruppe Wasserstoff, Methyl, Methoxy, Sulfo, Hydroxy, Amino, Acetylamino und Hydroxyacetylamino bedeutet.

**11.** Verbindungen gemäss einem der Ansprüche 1 bis 9, dadurch gekennzeichnet, dass A' die Bedeutung von A hat.

**12.** Verbindungen gemäss Anspruch 11 der Formel

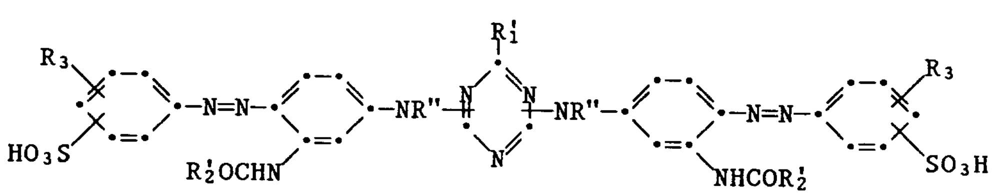

(5),

worin R'', $R_1'$, $R_2'$ und $R_3$ jeweils die im Anspruch 10 angegebene Bedeutung haben.

**13.** Verbindungen gemäss Anspruch 12 der Formel (5), worin $R_1'$ Morpholino, N-Hydroxy-$C_1$-$C_2$-alkylamino oder N,N-Di-hydroxy-$C_1$-$C_2$-alkylamino bedeutet, $R_2'$ für Methyl, Ethyl oder Hydroxymethyl steht, R'' Wasserstoff ist und $R_3$ Wasserstoff, Methyl, Methoxy oder Chlor bedeutet.

**14.** Verbindungen gemäss Anspruch 12 der Formel

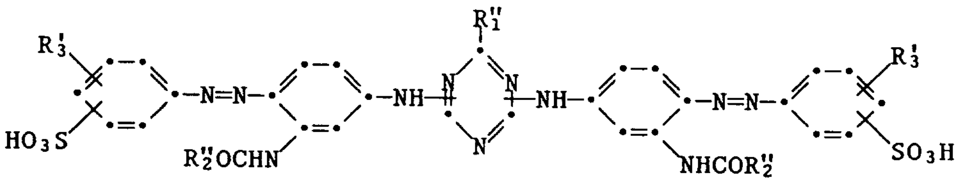 (6),

worin $R_1''$ N,N-Di-β-hydroxyethylamino oder Morpholino ist, $R_2''$ Methyl oder Hyxdroxymethyl bedeutet und $R_3'$ für Wasserstoff, Methyl oder Methoxy steht.

**15.** Verfahren zur Herstellung von Verbindungen der Formel (1) nach Anspruch 1, dadurch gekennzeichnet, dass man eine Verbindung der Formel

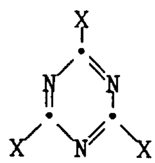 (7)

nacheinander in beliebiger Reihenfolge mit einer Verbindung der Formel

A'-NHR' (8),

einer Verbindung der Formel

A-NHR (8a)

und einer Verbindung der Formel

$R_1$-H (9)

umsetzt, wobei A, A', R, R' und $R_1$ jeweils die im Anspruch 1 angegebene Bedeutung haben und X Halogen, vorzugsweise Chlor, ist.

**16.** Verwendung der Farbstoffe nach einem der Ansprüche 1 bis 14 zum Färben und Bedrucken von stickstoffhaltigen und insbesondere cellulosischen Fasermaterialien.

**17.** Verwendung nach Anspruch 16, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

**18.** Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150 °C, vorzugsweise 120 bis 130 °C, und einem pH-Wert zwischen 4 und 7,5 färbt.

**Patentansprüche für folgenden Vertragsstaat : ES**

1. Verfahren zur Herstellung von Verbindungen der Formel

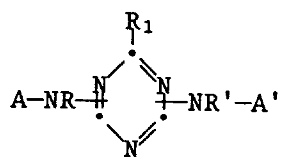

(1),

worin A ein Rest der Formel

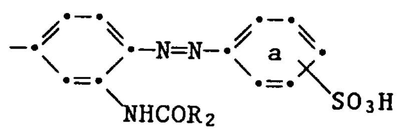

(2)

ist, A' die Bedeutung von A hat oder für einen von A verschiedenen Rest der Formel

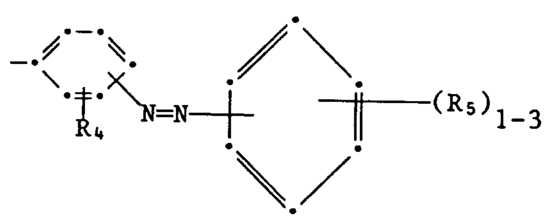

,

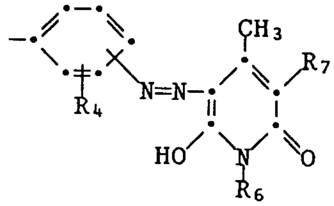

,

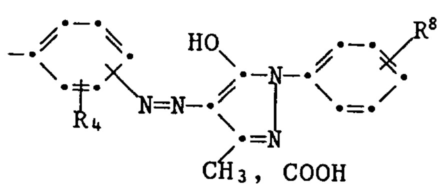

oder

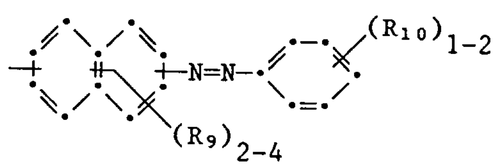

,

worin $R_4$ Wasserstoff, Methyl, Methoxy, Sulfo, Chlor, Acetylamino, Hydroxymethylamino, Propionylamino oder Carboxy ist, $R_5$ für 1 bis 3 gleiche oder verschiedene Reste ausgewählt aus der Gruppe Sulfo, Methyl, Methoxy, Chlor, Hydroxy, Carboxy und o-, m- oder p-Sulfophenylazo steht, $R_6$ Wasserstoff, $C_1$-$C_4$-Alkyl oder $C_1$-$C_4$-Alkoxy-$C_1$-$C_4$-alkyl bedeutet, $R_7$ Sulfomethyl, Cyano oder Carbamoyl ist, $R_8$ Wasserstoff, Methyl, Methoxy, Chlor, Sulfo oder Carboxy ist, $R_9$ für 2 bis 4 gleiche oder verschiedene Substituenten ausgewählt aus der Gruppe Hydroxy und Sulfo steht und $R_{10}$ 1 oder 2 gleiche oder verschiedene Reste ausgewählt aus der Gruppe Wasserstoff, Methyl, Methoxy, Sulfo, Hydroxy, Amino, Acetylamino und Hydroxyacetylamino bedeutet, steht, R und R' unabhängig voneinander Wasserstoff

oder gegebenenfalls substituiertes $C_1$-$C_4$-Alkyl bedeuten, $R_1$ Hydroxy, $C_1$-$C_4$-Alkoxy, Halogen, $C_1$-$C_4$-Alkylthio, Amino, unsubstituiertes oder im Alkylteil durch Hydroxy, Carboxy oder $C_1$-$C_4$-Alkoxy substituiertes N-Mono-oder N,N-Di-$C_1$-$C_4$-Alkylamino, Cyclohexylamino, unsubstituiertes oder im Phenylteil durch $C_1$-$C_4$-Alkyl, $C_1$-$C_4$-Alkoxy, Carboxy, Sulfo und/oder Halogen substituiertes Phenylamino oder N-$C_1$-$C_4$-Alkyl-N-phenylamino, Morpholino, Piperidino oder 3-Carboxy- oder 3-Carbonamidopyridin-1-yl bedeutet, $R_2$ für gegebenenfalls substituiertes $C_1$-$C_4$-Alkyl steht und der Phenylrest (a) gegebenenfalls weitersubstituiert ist, dadurch gekennzeichnet, dass man eine Verbindung der Formel

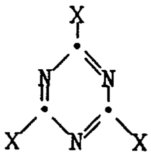

(7)

nacheinander in beliebiger Reihenfolge mit einer Verbindung der Formel

A'-NHR' (8),

einer Verbindung der Formel

A-NHR (8a)

und einer Verbindung der Formel

$R_1$-H (9)

umsetzt, wobei A, A', R, R' und $R_1$ jeweils die oben angegebenen Bedeutungen haben und X Halogen, vorzugsweise Chlor, ist.

2. Verfahren gemäss Anspruch 1, dadurch gekennzeichnet, dass R und R' jeweils Wasserstoff bedeuten.

3. Verfahren gemäss Anspruch 1, dadurch gekennzeichnet, dass $R_1$ unsubstituiertes oder im Alkylteil durch Hydroxy, Carboxy, Methoxy oder Ethoxy substituiertes N-Mono- oder N,N-Di-$C_1$-$C_4$-Alkylamino, unsubstituiertes oder im Phenylteil durch Chlor, Methyl, Methoxy und/oder Sulfo substituiertes Phenylamino, N-$C_1$-$C_4$-Alkyl-N-phenylamino, $C_1$-$C_4$-Alkylthio, Chlor, Morpholino oder Piperidino bedeutet.

4. Verfahren gemäss Anspruch 3, dadurch gekennzeichnet, dass $R_1$ Morpholino oder einen unsubstituierten oder im Alkylteil durch Hydroxy, Methoxy oder Ethoxy substituierten N-Mono- oder N,N-Di-$C_1$-$C_4$-Alkylaminorest bedeutet.

5. Verfahren gemäss Anspruch 4, dadurch gekennzeichnet, dass $R_1$ für den Morpholino- oder den N,N-Di-$\beta$-hydroxyethylaminorest steht.

6. Verfahren gemäss einem der Ansprüche 1 bis 5, dadurch gekennzeichnet, dass $R_2$ unsubstituiertes oder durch Hydroxy substituiertes $C_1$-$C_3$-Alkyl bedeutet.

7. Verfahren gemäss Anspruch 6, dadurch gekennzeichnet, dass $R_2$ für den Methyl- oder Hydroxymethylrest steht.

8. Verfahren gemäss einem der Ansprüche 1 bis 7, dadurch gekennzeichnet, dass der Phenylrest (a) keine weiteren Substituenten enthält oder durch $C_1$-$C_4$-Alkyl, $C_1$-$C_4$-Alkoxy, Halogen, Hydroxy, Carboxy, Sulfo, -NHCOR$_2$ oder Arylazo weitersubstituiert ist und $R_2$ die im Anspruch 1 angegebene Bedeutung hat.

9. Verfahren gemäss einem der Ansprüche 1 bis 8, dadurch gekennzeichnet, dass der Phenylrest (a) keine weiteren Substituenten enthält oder durch $C_1$-$C_4$-Alkyl, $C_1$-$C_4$-Alkoxy, Halogen, Hydroxy und/oder Carboxy weitersubstituiert ist.

**10.** Verfahren gemäss Anspruch 1 zur Herstellung von Verbindungen der Formel

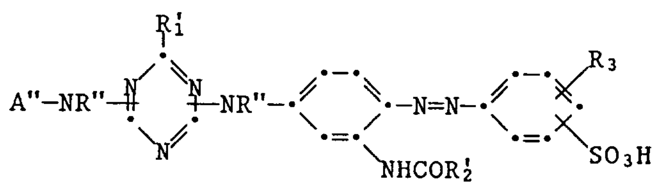 (4)

worin $R_1'$ Chlor, Morpholino, Piperidino, $C_1$-$C_4$-Alkylthio, N-$C_1$-$C_4$-Alkyl-N-phenylamino, unsubstituiertes oder durch Chlor, Methyl, Methoxy und/oder Sulfo substituiertes Phenylamino oder unsubstituiertes oder im Alkylteil durch Hydroxy, Carboxy, Methoxy oder Ethoxy substituiertes N-Mono- oder N,N-Di-$C_1$-$C_4$-Alkylamino bedeutet, $R_2'$ unsubstituiertes oder durch Hydroxy substituiertes $C_1$-$C_3$-Alkyl ist, $R_3$ Wasserstoff, $C_1$-$C_4$-Alkyl, $C_1$-$C_4$-Alkoxy, Halogen, Hydroxy oder Carboxy bedeutet, R'' Wasserstoff, Methyl oder Ethyl ist und A'' ein Rest der Formel

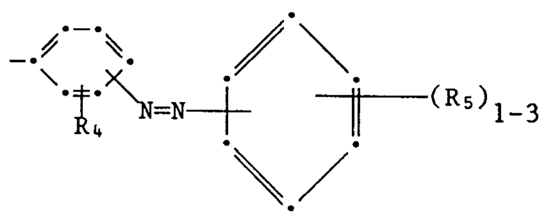 ,

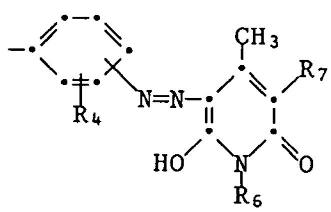 ,

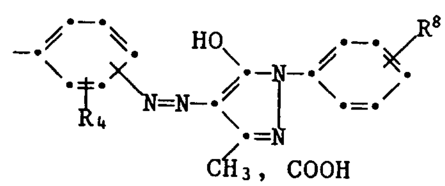 oder

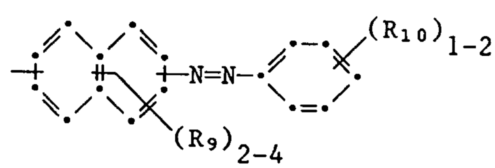 ,

worin $R_4$ Wasserstoff, Methyl, Methoxy, Sulfo, Chlor, Acetylamino, Hydroxymethylamino, Propionylamino oder Carboxy ist, $R_5$ für 1 bis 3 gleiche oder verschiedene Reste ausgewählt aus der Gruppe Sulfo, Methyl, Methoxy, Chlor, Hydroxy, Carboxy und o-, m- oder p-Sulfophenylazo steht, $R_6$ Wasserstoff, $C_1$-$C_4$-Alkyl oder $C_1$-$C_4$-Alkoxy-$C_1$-$C_4$-alkyl bedeutet, $R_7$ Sulfomethyl, Cyano oder Carbamoyl ist, $R_8$ Methyl, Methoxy, Chlor, Sulfo oder Carboxy ist, $R_9$ für 2 bis 4 gleiche oder verschiedene Substituenten ausgewählt aus der Gruppe Hydroxy und Sulfo steht und $R_{10}$ 1 oder 2 gleiche oder verschiedene Reste ausgewählt aus der Gruppe Wasserstoff, Methyl, Methoxy, Sulfo, Hydroxy, Amino, Acetylamino und Hydroxyacetylamino bedeutet.

**11.** Verfahren gemäss einem der Ansprüche 1 bis 9, dadurch gekennzeichnet, dass A' die Bedeutung von A hat.

**12.** Verfahren gemäss Anspruch 11 zur Herstellung von Verbindungen der Formel

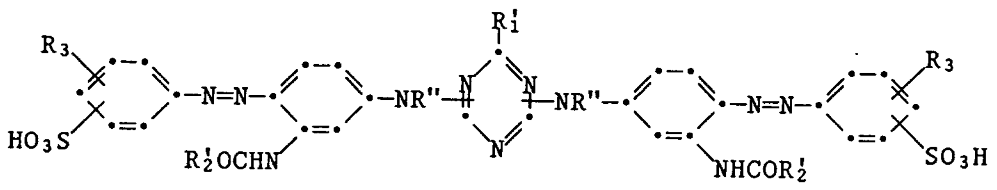

(5),

worin R'', $R_1'$, $R_2'$ und $R_3$ jeweils die im Anspruch 10 angegebene Bedeutung haben.

**13.** Verfahren gemäss Anspruch 12 zur Herstellung von Verbindungen der Formel (5), worin $R_1'$ Morpholino, N-Hydroxy-$C_1$-$C_2$-alkylamino oder N,N-Di-hydroxy-$C_1$-$C_2$-alkylamino bedeutet, $R_2'$ für Methyl, Ethyl oder Hydroxymethyl steht, R'' Wasserstoff ist und $R_3$ Wasserstoff, Methyl, Methoxy oder Chlor bedeutet.

**14.** Verfahren gemäss Anspruch 12 zur Herstellung von Verbindungen der Formel

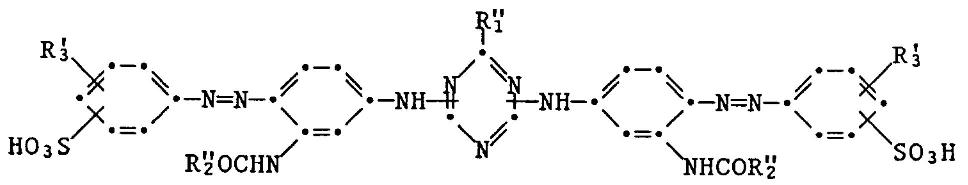

(6),

worin $R_1''$ N,N-Di-$\beta$-hydroxyethylamino oder Morpholino ist, $R_2''$ Methyl oder Hyxdroxymethyl bedeutet und $R_3'$ für Wasserstoff, Methyl oder Methoxy steht.

**15.** Verwendung der nach einem der Ansprüche 1 bis 14 hergestellten Farbstoffe zum Färben und Bedrucken von stickstoffhaltigen und insbesondere cellulosischen Fasermaterialien.

**16.** Verwendung nach Anspruch 15, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

**17.** Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen gemäss Anspruch 1 hergestellte Farbstoffe der Formel (1) verwendet und aus wässriger Flotte bei Temperaturen im Bereich von 100 bis 150 °C, vorzugsweise 120 bis 130 °C, und einem pH-Wert zwischen 4 und 7,5 färbt.

## Claims
## Claims for the following Contracting States : BE, CH, LI, DE, FR, GB, IT

**1.** A compound of the formula

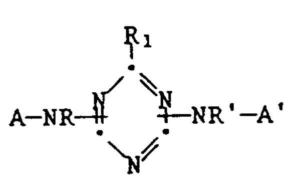

(1)

in which A is a radical of the formula

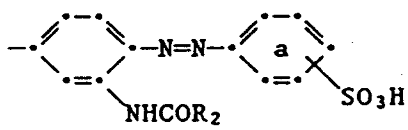

(2)

A' has the meaning of A or is a radical which is different from A and has the formula

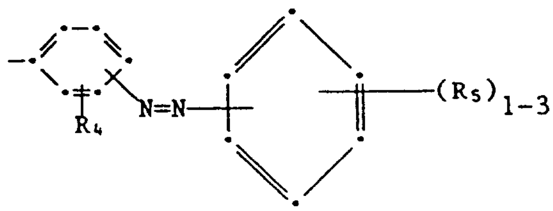

,

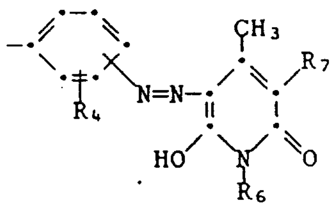

,

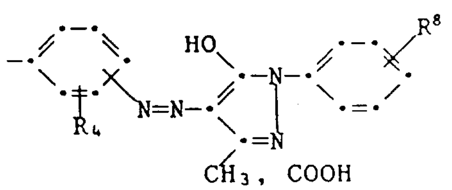

or

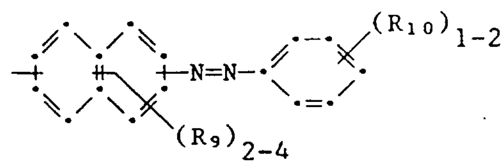

,

in which $R_4$ is hydrogen, methyl, methoxy, sulfo, chlorine, acetylamino, hydroxymethylamino, propionylamino or carboxyl, $R_5$ has the meaning of 1 to 3 identical or different radicals selected from the group consisting of sulfo, methyl, methoxy, chlorine, hydroxyl, carboxyl and o-, m- or p-sulfophenylazo, $R_6$ is hydrogen, $C_1$-$C_4$alkyl or $C_1$-$C_4$alkoxy-$C_1$-$C_4$alkyl, $R_7$ is sulfomethyl, cyano or carbamoyl, $R_8$ is hydrogen, methyl, methoxy, chlorine, sulfo or carboxyl, $R_9$ has the meaning of 2 to 4 identical or different substituents selected from the group consisting of hydroxyl and sulfo and $R_{10}$ has the meaning of 1 or 2 identical or different radicals selected from the group consisting of hydrogen, methyl, methoxy, sulfo, hydroxyl, amino, acetylamino and hydroxyacetylamino, R and R', independently of one another, are hydrogen or substituted or unsubstituted $C_1$-$C_4$alkyl, $R_1$ is hydroxyl, $C_1$-$C_4$alkoxy, halogen, $C_1$-$C_4$-alkylthio, amino, N-mono- or N,N-di-$C_1$-$C_4$alkylamino which is unsubstituted or substituted in the alkyl moiety by hydroxyl, carboxyl or $C_1$-$C_4$alkoxy, cyclohexylamino, phenylamino or N-$C_1$-$C_4$alkyl-N-phenylamino which are unsubstituted or substituted in the phenyl moiety by $C_1$-$C_4$alkyl, $C_1$-$C_4$alkoxy, carboxyl, sulfo and/or halogen, morpholino, piperidino or 3-carboxy- or 3-carboxamidopyridin-1-yl, $R_2$ is substituted or unsubstituted $C_1$-$C_4$alkyl and the phenyl radical (a) is unsubstituted or further substituted.

**2.** A compound according to claim 1, wherein R and R' are each hydrogen.

**3.** A compound according to claim 1, wherein $R_1$ is N-mono- or N,N-di-$C_1$-$C_4$ alkylamino which is unsubstituted or substituted in the alkyl moiety by hydroxyl, carboxyl, methoxy or ethoxy, phenylamino which is unsubstituted or substituted in the phenyl moiety by chlorine, methyl, methoxy and/or sulfo, or N-$C_1$-$C_4$alkyl-N-phenylamino, $C_1$-$C_4$alkylthio, chlorine, morpholino or piperidino.

**4.** A compound according to claim 3, wherein $R_1$ is morpholino or an N-mono- or N,N-di-$C_1$-$C_4$alkylamino radical which is unsubstituted or substituted in the alkyl moiety by hydroxyl, methoxy or ethoxy.

**5.** A compound according to claim 4, wherein $R_1$ is a morpholino or an N,N-di-$\beta$-hydroxyethylamino radical.

**6.** A compound according to any one of claims 1 to 5, wherein $R_2$ is $C_1$-$C_3$alkyl which is unsubstituted or substituted by hydroxyl.

**7.** A compound according to claim 6, wherein $R_2$ is a methyl or hydroxymethyl radical.

**8.** A compound according to any one of claims 1 to 7, wherein the phenyl radical (a) does not contain any further substituents or is further substituted by $C_1$-$C_4$alkyl, $C_1$-$C_4$alkoxy, halogen, hydroxyl, carboxyl, sulfo, -NHCOR$_2$ or arylazo and $R_2$ is as defined in claim 1.

**9.** A compound according to any one of claims 1 to 8, wherein the phenyl radical (a) does not contain any further substituents or is further substituted by $C_1$-$C_4$alkyl, $C_1$-$C_4$alkoxy, halogen, hydroxyl and/or carboxyl.

**10.** A compound according to claim 1 of the formula

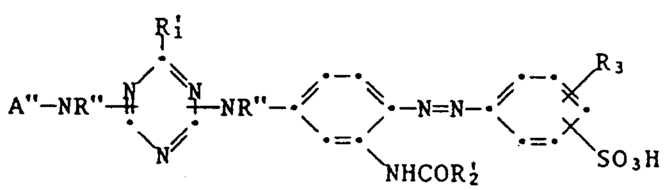

(4)

in which $R_1'$ is chlorine, morpholino, piperidino, $C_1$-$C_4$alkylthio, N-$C_1$-$C_4$alkyl-N-phenylamino, phenylamino which is unsubstituted or substituted by chlorine, methyl, methoxy and/or sulfo, or N-mono- or N,N-di-$C_1$-$C_4$alkylamino which is unsubstituted or substituted in the alkyl moiety by hydroxyl, carboxyl, methoxy or ethoxy, $R_2'$ is $C_1$-$C_3$alkyl which is unsubstituted or substituted by hydroxyl, $R_3$ is hydrogen, $C_1$-$C_4$alkyl, $C_1$-$C_4$alkoxy, halogen, hydroxyl or carboxyl, R" is hydrogen, methyl or ethyl and A" is a radical of the formula

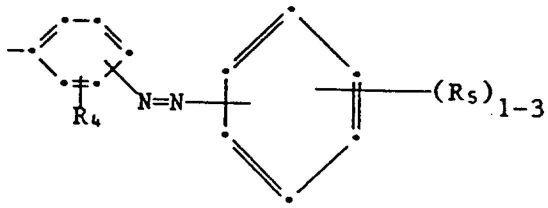

,

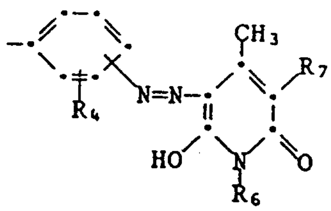

,

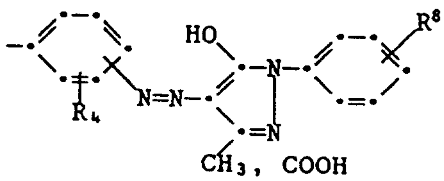

or

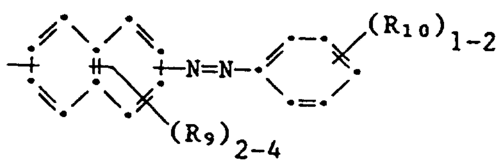

,

in which $R_4$ is hydrogen, methyl, methoxy, sulfo, chlorine, acetylamino, hydroxymethylamino, propionylamino or carboxyl, $R_5$ has the meaning of 1 to 3 identical or different radicals selected from the group consisting of sulfo, methyl, methoxy, chlorine, hydroxyl, carboxyl and o-, m- or p-sulfophenylazo, $R_6$ is hydrogen, $C_1$-$C_4$alkyl or $C_1$-$C_4$alkoxy-$C_1$-$C_4$alkyl, $R_7$ is sulfomethyl, cyano or carbamoyl, $R_8$ is methyl, methoxy, chlorine, sulfo or carboxyl, $R_9$ has the meaning of 2 to 4 identical or different substituents selected from the group consisting of hydroxyl and sulfo and $R_{10}$ has the meaning of 1 or 2 identical or different radicals selected from the group consisting of hydrogen, methyl, methoxy, sulfo, hydroxyl, amino, acetylamino and hydroxyacetylamino.

**11.** A compound according to any one of claims 1 to 9, wherein A' has the meaning of A.

**12.** A compound according to claim 11 of the formula

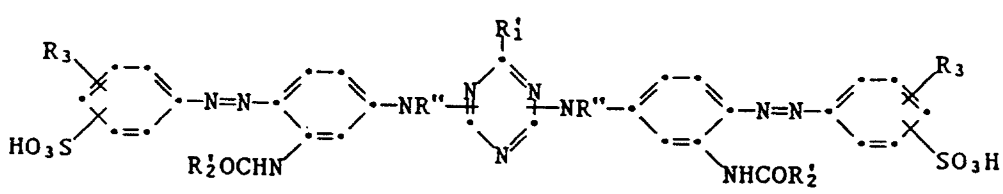

(5)

in which R'', $R_1'$, $R_2'$ and $R_3$ are each as defined in claim 10.

**13.** A compound according to claim 12 of the formula (5) in which $R_1'$ is morpholino, N-hydroxy-$C_1$-$C_2$alkylamino or N,N-dihydroxy-$C_1$-$C_2$alkylamino, $R_2'$ is methyl, ethyl or hydroxymethyl, R'' is hydrogen and $R_3$ is hydrogen, methyl, methoxy or chlorine.

**14.** A compound according to claim 12 of the formula

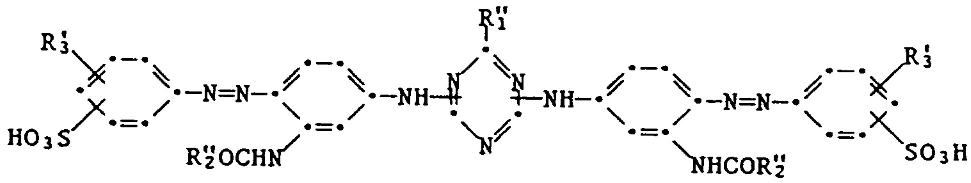

(6)

in which $R_1''$ is N,N-di-$\beta$-hydroxyethylamino or morpholino, $R_2''$ is methyl or hydroxymethyl and $R_3'$ is hydrogen, methyl or methoxy.

**15.** A process for the preparation of compounds of the formula (1) according to claim 1, which comprises reacting a compound of the formula

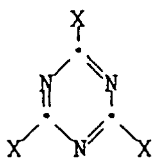

(7)

successively in any desired sequence with a compound of the formula

A'-NHR' (8),

a compound of the formula

A-NHR (8a)

and a compound of the formula

$R_1$-H (9)

in which A, A', R, R' and $R_1$ are each as defined in claim 1 and X is halogen, preferably chlorine.

**16.** Use of the dyes according to any one of claims 1 to 14 for the dyeing and printing of nitrogen-containing and in particular cellulosic fibre materials.

**17.** Use according to claim 16, wherein fibre mixtures consisting of synthetic fibres and cellulosic fibre materials, in particular polyester/cotton mixed fabric, are dyed in the presence of a disperse dye for the polyester fibres under the dyeing conditions for polyester fibres.

**18.** A process for the dyeing of polyester/cotton mixed fabrics with disperse and direct dyes, wherein, in addition to the disperse dyes, dyes of the formula (1) according to claim 1 are used in a one-step single-bath process and the dyeing is carried out from aqueous liquor at temperatures in the range from 100 to 150 ° C, preferably 120 to 130 ° C, and a pH between 4 and 7.5.

**Claims for the following Contracting State : ES**

**1.** A process for the prepararation of a compound of the formula

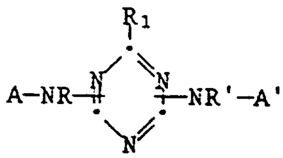

(1)

in which A is a radical of the formula

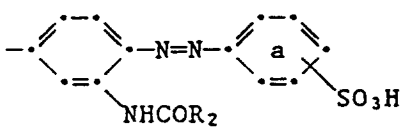

(2)

A' has the meaning of A or is a radical which is different from A and has the formula

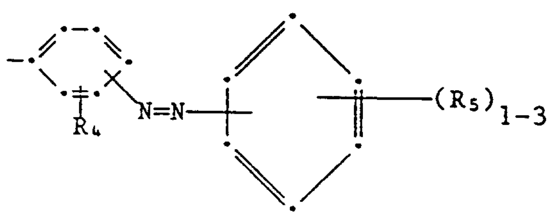

,

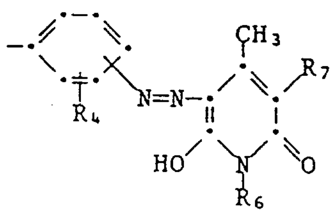

,

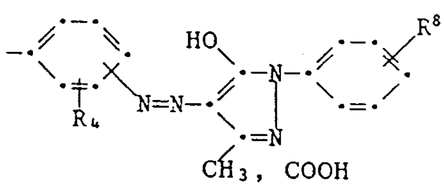

or

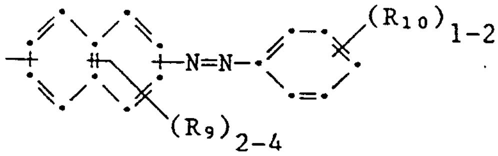

,

in which $R_4$ is hydrogen, methyl, methoxy, sulfo, chlorine, acetylamino, hydroxymethylamino, propionylamino or carboxyl, $R_5$ has the meaning of 1 to 3 identical or different radicals selected from the group consisting of sulfo, methyl, methoxy, chlorine, hydroxyl, carboxyl and o-, m- or p-sulfophenylazo, $R_6$ is hydrogen, $C_1$-$C_4$alkyl or $C_1$-$C_4$alkoxy-$C_1$-$C_4$alkyl, $R_7$ is sulfomethyl, cyano or carbamoyl, $R_8$ is hydrogen, methyl, methoxy, chlorine, sulfo or carboxyl, $R_9$ has the meaning of 2 to 4 identical or different substituents selected from the group consisting of hydroxyl and sulfo and $R_{10}$ has the meaning of 1 or 2 identical or different radicals selected from the group consisting of hydrogen, methyl, methoxy, sulfo, hydroxyl, amino, acetylamino and hydroxyacetylamino, R and R', independently of one

another, are hydrogen or substituted or unsubstituted $C_1$-$C_4$alkyl, $R_1$ is hydroxyl, $C_1$-$C_4$alkoxy, halogen, $C_1$-$C_4$-alkylthio, amino, N-mono- or N,N-di-$C_1$-$C_4$alkylamino which is unsubstituted or substituted in the alkyl moiety by hydroxyl, carboxyl or $C_1$-$C_4$alkoxy, cyclohexylamino, phenylamino or N-$C_1$-$C_4$alkyl-N-phenylamino which are unsubstituted or substituted in the phenyl moiety by $C_1$-$C_4$alkyl, $C_1$-$C_4$alkoxy, carboxyl, sulfo and/or halogen, morpholino, piperidino or 3-carboxy- or 3-carboxamidopyridin-1-yl, $R_2$ is substituted or unsubstituted $C_1$-$C_4$alkyl and the phenyl radical (a) is unsubstituted or further substituted, which comprises reacting a compound of the formula

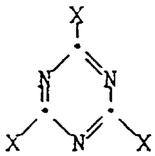

(7)

successively in any desired sequence with a compound of the formula

A'-NHR' (8),

a compound of the formula

A-NHR (8a)

and a compound of the formula

$R_1$-H (9)

in which A, A', R, R' and $R_1$ are each as defined above and X is halogen, preferably chlorine.

**2.** A process according to claim 1, wherein R and R' are each hydrogen.

**3.** A process according to claim 1, wherein $R_1$ is N-mono- or N,N-di-$C_1$-$C_4$ alkylamino which is unsubstituted or substituted in the alkyl moiety by hydroxyl, carboxyl, methoxy or ethoxy, phenylamino which is unsubstituted or substituted in the phenyl moiety by chlorine, methyl, methoxy and/or sulfo, or N-$C_1$-$C_4$alkyl-N-phenylamino, $C_1$-$C_4$alkylthio, chlorine, morpholino or piperidino.

**4.** A process according to claim 3, wherein $R_1$ is morpholino or an N-mono- or N,N-di-$C_1$-$C_4$alkylamino radical which is unsubstituted or substituted in the alkyl moiety by hydroxyl, methoxy or ethoxy.

**5.** A process according to claim 4, wherein $R_1$ is a morpholino or an N,N-di-$\beta$-hydroxyethylamino radical.

**6.** A process according to any one of claims 1 to 5, wherein $R_2$ is $C_1$-$C_3$alkyl which is unsubstituted or substituted by hydroxyl.

**7.** A process according to claim 6, wherein $R_2$ is a methyl or hydroxymethyl radical.

**8.** A process according to any one of claims 1 to 7, wherein the phenyl radical (a) does not contain any further substituents or is further substituted by $C_1$-$C_4$alkyl, $C_1$-$C_4$alkoxy, halogen, hydroxyl, carboxyl, sulfo, -NHCO$R_2$ or arylazo and $R_2$ is as defined in claim 1.

**9.** A process according to any one of claims 1 to 8, wherein the phenyl radical (a) does not contain any further substituents or is further substituted by $C_1$-$C_4$alkyl, $C_1$-$C_4$alkoxy, halogen, hydroxyl and/or carboxyl.

**10.** A process according to claim 1 for the preparation of a compound of the formula

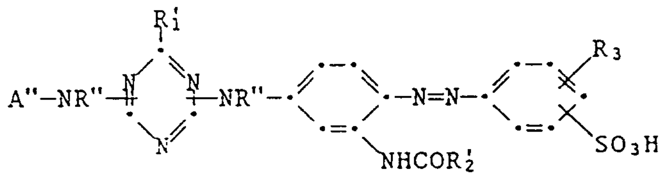 (4)

in which $R_1'$ is chlorine, morpholino, piperidino, $C_1$-$C_4$alkylthio, N-$C_1$-$C_4$alkyl-N-phenylamino, phenylamino which is unsubstituted or substituted by chlorine, methyl, methoxy and/or sulfo, or N-mono- or N,N-di-$C_1$-$C_4$alkylamino which is unsubstituted or substituted in the alkyl moiety by hydroxyl, carboxyl, methoxy or ethoxy, $R_2'$ is $C_1$-$C_3$alkyl which is unsubstituted or substituted by hydroxyl, $R_3$ is hydrogen, $C_1$-$C_4$alkyl, $C_1$-$C_4$alkoxy, halogen, hydroxyl or carboxyl, R" is hydrogen, methyl or ethyl and A" is a radical of the formula

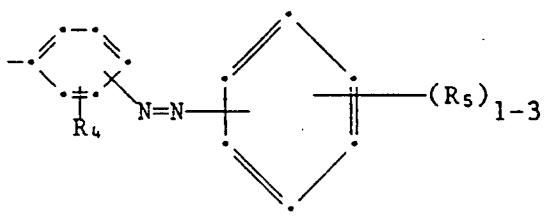 ,

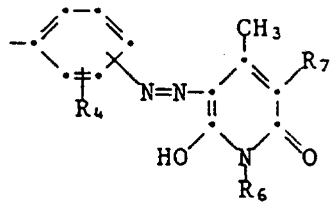 ,

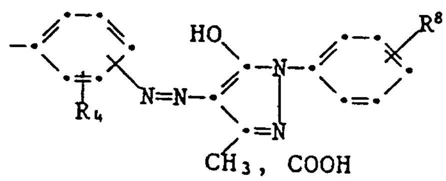 or

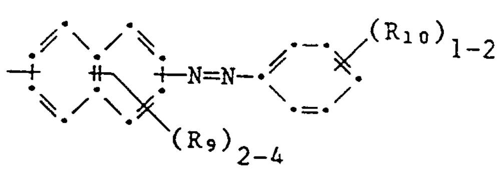 ,

in which $R_4$ is hydrogen, methyl, methoxy, sulfo, chlorine, acetylamino, hydroxymethylamino, propionylamino or carboxyl, $R_5$ has the meaning of 1 to 3 identical or different radicals selected from the group consisting of sulfo, methyl, methoxy, chlorine, hydroxyl, carboxyl and o-, m- or p-sulfophenylazo, $R_6$ is hydrogen, $C_1$-$C_4$alkyl or $C_1$-$C_4$alkoxy-$C_1$-$C_4$alkyl, $R_7$ is sulfomethyl, cyano or carbamoyl, $R_8$ is methyl, methoxy, chlorine, sulfo or carboxyl, $R_9$ has the meaning of 2 to 4 identical or different substituents selected from the group consisting of hydroxyl and sulfo and $R_{10}$ has the meaning of 1 or 2 identical or different radicals selected from the group consisting of hydrogen, methyl, methoxy, sulfo, hydroxyl, amino, acetylamino and hydroxyacetylamino.

**11.** A process according to any one of claims 1 to 9, wherein A' has the meaning of A.

**12.** A process according to claim 11 for the preparation of a compound of the formula

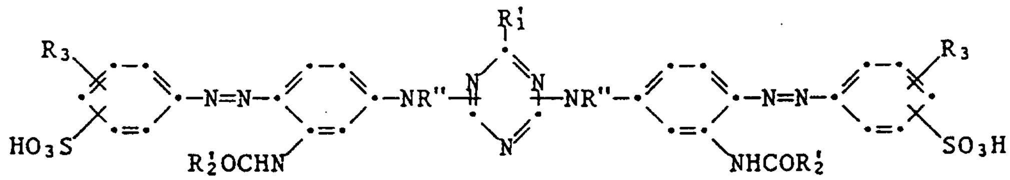

(5)

in which R", $R_1'$, $R_2'$ and $R_3$ are each as defined in claim 10.

**13.** A process according to claim 12 for the preparation of a compound of the formula (5) in which $R_1'$ is morpholino, N-hydroxy-$C_1$-$C_2$alkylamino or N,N-dihydroxy-$C_1$-$C_2$alkylamino, $R_2'$ is methyl, ethyl or hydroxymethyl, R" is hydrogen and $R_3$ is hydrogen, methyl, methoxy or chlorine.

**14.** A process according to claim 12 for the preparation of a compound of the formula

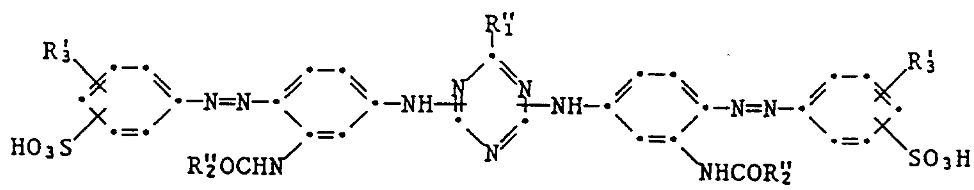

(6)

in which $R_1''$ is N,N-di-$\beta$-hydroxyethylamino or morpholino, $R_2''$ is methyl or hydroxymethyl and $R_3'$ is hydrogen, methyl or methoxy.

**15.** Use of the dyes prepared according to any one of claims 1 to 14 for the dyeing and printing of nitrogen-containing and in particular cellulosic fibre materials.

**16.** Use according to claim 15, wherein fibre mixtures consisting of synthetic fibres and cellulosic fibre materials, in particular polyester/cotton mixed fabric, are dyed in the presence of a disperse dye for the polyester fibres under the dyeing conditions for polyester fibres.

**17.** A process for the dyeing of polyester/cotton mixed fabrics with disperse and direct dyes, wherein, in addition to the disperse dyes, dyes of the formula (1) prepared according to claim 1 are used in a one-step single-bath process and the dyeing is carried out from aqueous liquor at temperatures in the range from 100 to 150 °C, preferably 120 to 130 °C, and a pH between 4 and 7.5.

**Revendications**
**Revendications pour les Etats contractants suivants : BE, CH, LI, DE, FR, GB, IT**

**1.** Composés de formule :

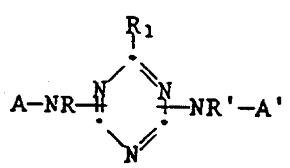

(1),

dans laquelle A représente un groupe de formule :

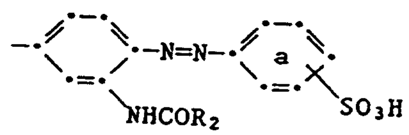 (2),

A' a la même signification que A ou représente un groupe différent de A, de formule :

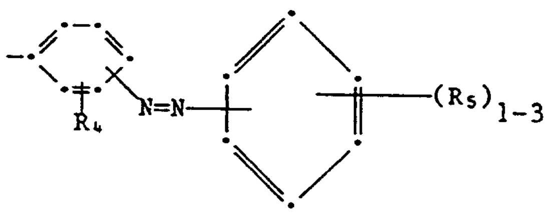 ,

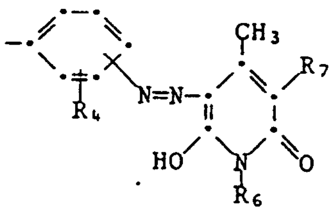 ,

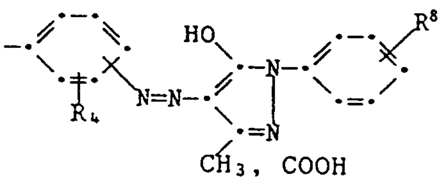 ou

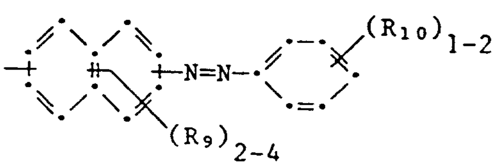 ,

formules dans lesquelles $R_4$ représente un atome d'hydrogène ou de chlore, ou un groupe méthyle, méthoxy, sulfo, acétylamino, hydroxyméthylamino, propionylamino ou carboxy, $R_5$ représente 1 à 3 groupes, identiques ou différents, choisis parmi l'atome de chlore et les groupes sulfo, méthyle, méthoxy, hydroxy, carboxy, o-sulfophénylazo, m-sulfophénylazo et p-sulfophénylazo, $R_6$ représente un atome d'hydrogène ou un groupe alkyle en $C_1$ à $C_4$ ou alcoxy ($C_1$ à $C_4$) alkyle ($C_1$ à $C_4$), $R_7$ représente un groupe sulfométhyle, cyano ou carbamoyle, $R_8$ représente un atome d'hydrogène ou de chlore, ou un groupe méthyle, méthoxy, sulfo ou carboxy, $R_9$ représente 2 à 4 substituants, identiques ou différents, choisis parmi les groupes hydroxy et sulfo, et $R_{10}$ représente 1 ou 2 groupes, identiques ou différents, choisis parmi l'atome d'hydrogène et les groupes méthyle, méthoxy, sulfo, hydroxy, amino, acétylamino et hydroxyacétylamino,

R et R' représentent chacun, indépendamment l'un de l'autre, un atome d'hydrogène ou un groupe alkyle en $C_1$ à $C_4$, éventuellement substitué,

$R_1$ représente un atome d'halogène ou un groupe hydroxy, alcoxy en $C_1$ à $C_4$, alkylthio en $C_1$ à $C_4$, amino, N-monoalkyl($C_1$ à $C_4$)amino ou N,N-dialkyl($C_1$ à $C_4$)amino, non-substitué ou substitué dans la partie alkyle par un groupe hydroxy, carboxy ou alcoxy en $C_1$ à $C_4$, cyclohexylamino, phénylamino ou N-alkyl($C_1$ à $C_4$)-N-phénylamino, non-substitué ou substitué dans la partie phényle par un groupe alkyle en $C_1$ à $C_4$, alcoxy en $C_1$ à $C_4$, carboxy, sulfo et/ou un atome d'halogène, morpholino, pipéridino, 3-carboxy-pyridine-1-yle ou 3-carbonamido-pyridine-1-yle,

$R_2$ représente un groupe alkyle en $C_1$ à $C_4$, éventuellement substitué,

et le noyau phényle (a) est éventuellement encore substitué.

**2.** Composés selon la revendication 1, **caractérisés** en ce que R et R' représentent chacun un atome d'hydrogène.

**3.** Composés selon la revendication 1, **caractérisés** en ce que $R_1$ représente un groupe N-monoalkyl($C_1$ à $C_4$)amino ou N,N-dialkyl($C_1$ à $C_4$)amino, non-substitué ou substitué dans la partie alkyle par un groupe hydroxy, carboxy, méthoxy ou éthoxy, un groupe phénylamino non-substitué ou substitué dans la partie phényle par un atome de chlore, un groupe méthyle, un groupe méthoxy et/ou un groupe sulfo, un groupe N-alkyl($C_1$ à $C_4$)-N-phénylamino, un groupe alkylthio en $C_1$ à $C_4$, un groupe morpholino, un groupe pipéridino ou un atome de chlore.

**4.** Composés selon la revendication 3, **caractérisés** en ce que $R_1$ représente un groupe morpholino ou un groupe N-monoalkyl($C_1$ à $C_4$)amino ou N,N-dialkyl($C_1$ à $C_4$)amino, non-substitué ou substitué dans la partie alkyle par un groupe hydroxy, méthoxy ou éthoxy.

**5.** Composés selon la revendication 4, **caractérisés** en ce que $R_1$ représente le groupe morpholino ou le groupe N,N-di($\beta$-hydroxyéthyl)amino.

**6.** Composés selon l'une quelconque des revendications 1 à 5, **caractérisés** en ce que $R_2$ représente un groupe alkyle en $C_1$ à $C_3$, non-substitué ou substitué par un groupe hydroxy.

**7.** Composés selon la revendication 6, **caractérisés** en ce que $R_2$ représente le groupe méthyle ou hydroxyméthyle.

**8.** Composés selon l'une quelconque des revendications 1 à 7, **caractérisés** en ce que le noyau phényle (a) ne porte pas d'autres substituants ou est encore substitué par un atome d'halogène ou un groupe alkyle en $C_1$ à $C_4$, alcoxy en $C_1$ à $C_4$, hydroxy, carboxy, sulfo, -NHCOR$_2$ ou arylazo, $R_2$ ayant les significations indiquées dans la revendication 1.

**9.** Composés selon l'une quelconque des revendications 1 à 8, **caractérisés** en ce que le noyau phényle (a) ne porte pas d'autres substituants ou est encore substitué par un ou plusieurs substituants pris parmi les atomes d'halogène et les groupes alkyle en $C_1$ à $C_4$, alcoxy en $C_1$ à $C_4$, hydroxy et carboxy.

**10.** Composés selon la revendication 1, de formule :

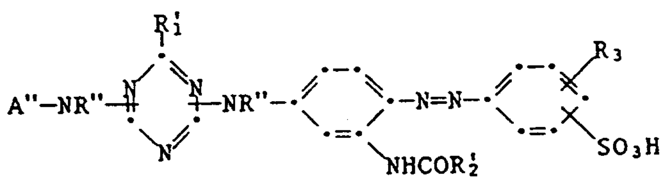

(4)

dans laquelle $R'_1$ représente un atome de chlore ou un groupe morpholino, pipéridino, alkylthio en $C_1$ à $C_4$, N-alkyl($C_1$ à $C_4$)-N-phénylamino, phénylamino non-substitué ou substitué par un ou plusieurs substituants pris parmi l'atome de chlore et les groupes méthyle, méthoxy et sulfo, ou N-monoalkyl($C_1$ à $C_4$)amino ou N,N-dialkyl($C_1$ à $C_4$)amino, non-substitué ou substitué dans la partie alkyle par un groupe hydroxy, carboxy, méthoxy ou éthoxy, $R'_2$ représente un groupe alkyle en $C_1$ à $C_3$, non-substitué ou substitué par un groupe hydroxy, $R_3$ représente un atome d'hydrogène ou d'halogène, ou un groupe alkyle en $C_1$ à $C_4$, alcoxy en $C_1$ à $C_4$, hydroxy ou carboxy, R" représente un atome d'hydrogène ou un groupe méthyle ou éthyle, et A" représente un groupe de formule :

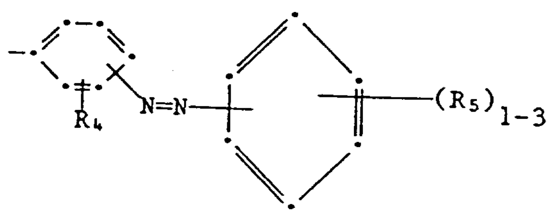

,

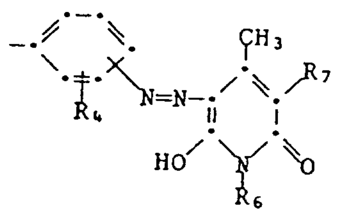

,

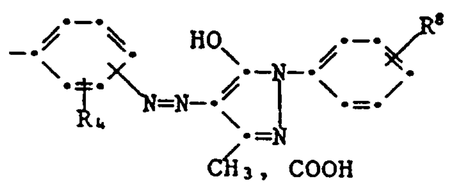

ou

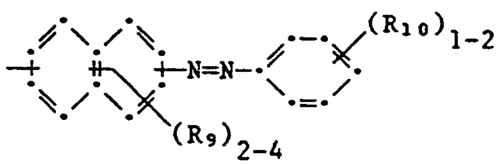

,

formules dans lesquelles $R_4$ représente un atome d'hydrogène ou de chlore, ou un groupe méthyle, méthoxy, sulfo, acétylamino, hydroxyméthylamino, propionylamino ou carboxy, $R_5$ représente 1 à 3 groupes, identiques ou différents, choisis parmi l'atome de chlore et les groupes sulfo, méthyle, méthoxy, hydroxy, carboxy, o-sulfophénylazo, m-sulfophénylazo et p-sulfophénylazo, $R_6$ représente un atome d'hydrogène ou un groupe alkyle en $C_1$ à $C_4$ ou alcoxy($C_1$ à $C_4$)alkyle($C_1$ à $C_4$), $R_7$ représente un groupe sulfométhyle, cyano ou carbamoyle, $R_8$ représente un atome de chlore ou un groupe méthyle, méthoxy, sulfo ou carboxy, $R_9$ représente 2 à 4 substituants, identiques ou différents, choisis parmi les groupes hydroxy et sulfo, et $R_{10}$ représente 1 ou 2 groupes, identiques ou différents, choisis parmi l'atome d'hydrogène et les groupes méthyle, méthoxy, sulfo, hydroxy, amino, acétylamino et hydroxyacétylamino.

**11.** Composés selon l'une quelconque des revendications 1 à 9, **caractérisés** en ce que A' a la même signification que A.

**12.** Composés selon la revendication 11, de formule :

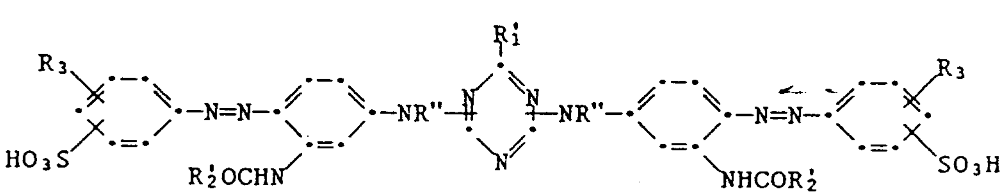

(5),

dans laquelle R'', $R'_1$, $R'_2$ et $R_3$ ont chacun la signification indiquée dans la revendication 10.

**13.** Composés de formule (5) selon la revendication 12, pour lesquels $R'_1$ représente un groupe morpholino, N-hydroxyalkyl($C_1$ à $C_2$)amino ou N,N-di(hydroxyalkyl($C_1$ à $C_2$))amino, $R'_2$ représente un groupe méthyle, éthyle ou hydroxyméthyle, R" représente un atome d'hydrogène et $R_3$ représente un atome d'hydrogène ou de chlore, ou un groupe méthyle ou méthoxy.

**14.** Composés selon la revendication 12, de formule :

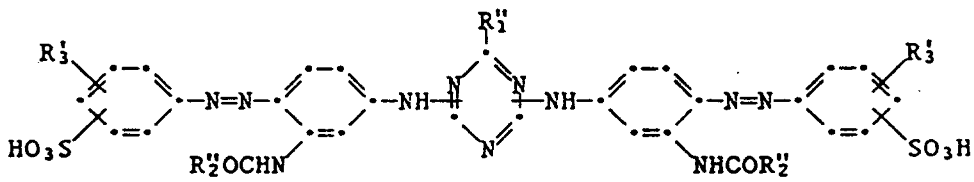

(6),

dans laquelle $R''_1$ représente un groupe N,N-di($\beta$-hydroxyéthyl)amino ou morpholino, $R''_2$ représente un groupe méthyle ou hydroxyméthyle et $R'_3$ représente un atome d'hydrogène ou un groupe méthyle ou méthoxy.

**15.** Procédé de préparation des composés de formule (1) selon la revendication 1, **caractérisé** en ce que l'on fait réagir un composé de formule :

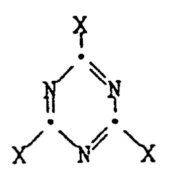

(7)

successivement, dans un ordre quelconque, avec un composé de formule :

A'-NHR' (8),

un composé de formule :

A-NHR (8a)

et un composé de formule :

$R_1$-H (9),

A, A', R, R' et $R_1$ ayant chacun la signification indiquée dans la revendication 1 et X représentant un atome d'halogène, de préférence un atome de chlore.

**16.** Utilisation des colorants selon l'une quelconque des revendications 1 à 14, pour la teinture et l'impression de matières fibreuses azotées et en particulier de matières fibreuses cellulosiques.

**17.** Utilisation selon la revendication 16, **caractérisée** en ce que l'on teint des mélanges de fibres synthétiques et de matières fibreuses cellulosiques, en particulier des tissus mélangés de polyester et de coton, en présence d'un colorant dispersé pour les fibres de polyester, dans les conditions de teinture convenant aux fibres de polyester.

**18.** Procédé de teinture de tissus mélangés de polyester et de coton, avec des colorants dispersés et des colorants directs, **caractérisé** en ce que l'on utilise, dans un procédé en une seule étape et à un seul bain, outre les colorants dispersés, des colorants de formule (1) selon la revendication 1, et on effectue la teinture dans un bain aqueux, à une température comprise dans l'intervalle allant de 100 à 150 °C, de préférence comprise dans l'intervalle allant de 120 à 130 °C, et à un pH compris entre 4 et 7,5.

**Revendications pour l'Etat contractant suivant : ES**

**1.** Procédé de préparation des composés de formule :

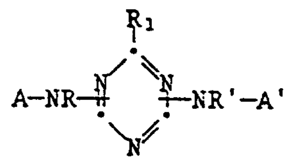

(1),

dans laquelle A représente un groupe de formule :

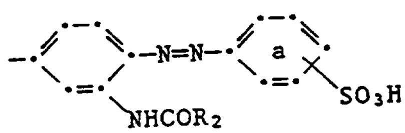

(2),

A' a la même signification que A ou représente un groupe différent de A, de formule :

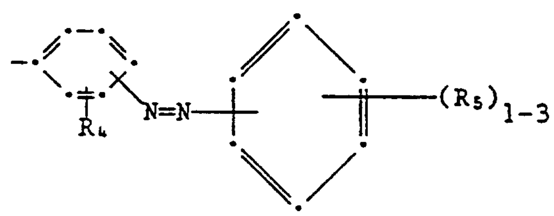

,

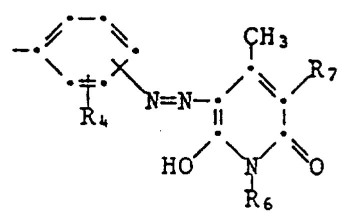

,

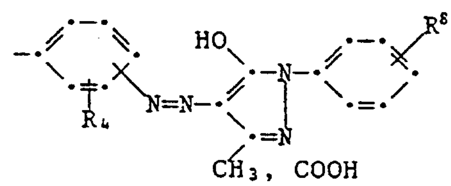

ou

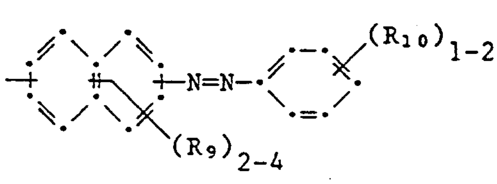

,

formules dans lesquelles $R_4$ représente un atome d'hydrogène ou de chlore, ou un groupe méthyle, méthoxy, sulfo, acétylamino, hydroxyméthylamino, propionylamino ou carboxy, $R_5$ représente 1 à 3 groupes, identiques ou différents, choisis parmi l'atome de chlore et les groupes sulfo, méthyle, méthoxy, hydroxy, carboxy, o-sulfophénylazo, m-sulfophénylazo et p-sulfophénylazo, $R_6$ représente un atome d'hydrogène ou un groupe alkyle en $C_1$ à $C_4$ ou alcoxy ($C_1$ à $C_4$) alkyle ($C_1$ à $C_4$), $R_7$ représente un groupe sulfométhyle, cyano ou carbamoyle, $R_8$ représente un atome d'hydrogène ou de chlore, ou un groupe méthyle, méthoxy, sulfo ou carboxy, $R_9$ représente 2 à 4 substituants, identiques

ou différents, choisis parmi les groupes hydroxy et sulfo, et $R_{10}$ représente 1 ou 2 groupes, identiques ou différents, choisis parmi l'atome d'hydrogène et les groupes méthyle, méthoxy, sulfo, hydroxy, amino, acétylamino et hydroxyacétylamino,
R et R' représentent chacun, indépendamment l'un de l'autre, un atome d'hydrogène ou un groupe alkyle en $C_1$ à $C_4$, éventuellement substitué,
$R_1$ représente un atome d'halogène ou un groupe hydroxy, alcoxy en $C_1$ à $C_4$, alkylthio en $C_1$ à $C_4$, amino, N-monoalkyl($C_1$ à $C_4$)amino ou N,N-dialkyl($C_1$ à $C_4$)amino, non-substitué ou substitué dans la partie alkyle par un groupe hydroxy, carboxy ou alcoxy en $C_1$ à $C_4$, cyclohexylamino, phénylamino ou N-alkyl($C_1$ à $C_4$)-N-phénylamino, non-substitué ou substitué dans la partie phényle par un groupe alkyle en $C_1$ à $C_4$, alcoxy en $C_1$ à $C_4$, carboxy, sulfo et/ou un atome d'halogène, morpholino, pipéridino, 3-carboxy-pyridine-1-yle ou 3-carbonamido-pyridine-1-yle,
$R_2$ représente un groupe alkyle en $C_1$ à $C_4$, éventuellement substitué,
et le noyau phényle (a) est éventuellement encore substitué,
**caractérisé** en ce que l'on fait réagir un composé de formule :

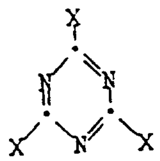

(7)

successivement, dans un ordre quelconque, avec un composé de formule :

A'-NHR' (8),

un composé de formule :

A-NHR (8a)

et un composé de formule :

$R_1$-H (9),

A, A', R, R' et $R_1$ ayant chacun la signification indiquée dans la revendication 1 et X représentant un atome d'halogène, de préférence un atome de chlore.

2. Procédé selon la revendication 1, **caractérisé** en ce que R et R' représentent chacun un atome d'hydrogène.

3. Procédé selon la revendication 1, **caractérisé** en ce que $R_1$ représente un groupe N-monoalkyl($C_1$ à $C_4$)amino ou N,N-dialkyl($C_1$ à $C_4$)amino, non-substitué ou substitué dans la partie alkyle par un groupe hydroxy, carboxy, méthoxy ou éthoxy, un groupe phénylamino non-substitué ou substitué dans la partie phényle par un atome de chlore, un groupe méthyle, un groupe méthoxy et/ou un groupe sulfo, un groupe N-alkyl($C_1$ à $C_4$)-N-phénylamino, un groupe alkylthio en $C_1$ à $C_4$, un groupe morpholino, un groupe pipéridino ou un atome de chlore.

4. Procédé selon la revendication 3, **caractérisé** en ce que $R_1$ représente un groupe morpholino ou un groupe N-monoalkyl($C_1$ à $C_4$)amino ou N,N-dialkyl($C_1$ à $C_4$)amino, non-substitué ou substitué dans la partie alkyle par un groupe hydroxy, méthoxy ou éthoxy.

5. Procédé selon la revendication 4, **caractérisé** en ce que $R_1$ représente le groupe morpholino ou le groupe N,N-di($\beta$-hydroxyéthyl)amino.

6. Procédé selon l'une quelconque des revendications 1 à 5, **caractérisé** en ce que $R_2$ représente un groupe alkyle en $C_1$ à $C_3$, non-substitué ou substitué par un groupe hydroxy.

**7.** Procédé selon la revendication 6, **caractérisé** en ce que $R_2$ représente le groupe méthyle ou hydroxyméthyle.

**8.** Procédé selon l'une quelconque des revendications 1 à 7, **caractérisé** en ce que le noyau phényle (a) ne porte pas d'autres substituants ou est encore substitué par un atome d'halogène ou un groupe alkyle en $C_1$ à $C_4$, alcoxy en $C_1$ à $C_4$, hydroxy, carboxy, sulfo, $-NHCOR_2$ ou arylazo, $R_2$ ayant les significations indiquées dans la revendication 1.

**9.** Procédé selon l'une quelconque des revendications 1 à 8, **caractérisé** en ce que le noyau phényle (a) ne porte pas d'autres substituants ou est encore substitué par un ou plusieurs substituants pris parmi les atomes d'halogène et les groupes alkyle en $C_1$ à $C_4$, alcoxy en $C_1$ à $C_4$, hydroxy et carboxy.

**10.** Procédé selon la revendication 1 pour la préparation des composés de formule :

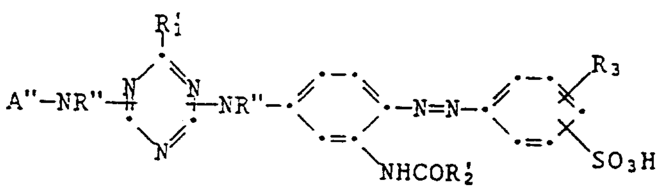

(4)

dans laquelle $R'_1$ représente un atome de chlore ou un groupe morpholino, pipéridino, alkylthio en $C_1$ à $C_4$, N-alkyl($C_1$ à $C_4$)-N-phénylamino, phénylamino non-substitué ou substitué par un ou plusieurs substituants pris parmi l'atome de chlore et les groupes méthyle, méthoxy et sulfo, ou N-monoalkyl($C_1$ à $C_4$)amino ou N,N-dialkyl($C_1$ à $C_4$)amino, non-substitué ou substitué dans la partie alkyle par un groupe hydroxy, carboxy, méthoxy ou éthoxy, $R'_2$ représente un groupe alkyle en $C_1$ à $C_3$, non-substitué ou substitué par un groupe hydroxy, $R_3$ représente un atome d'hydrogène ou d'halogène, ou un groupe alkyle en $C_1$ à $C_4$, alcoxy en $C_1$ à $C_4$, hydroxy ou carboxy, R'' représente un atome d'hydrogène ou un groupe méthyle ou éthyle, et A'' représente un groupe de formule :

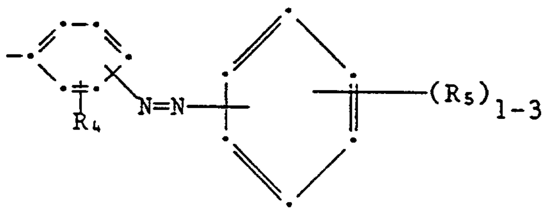

,

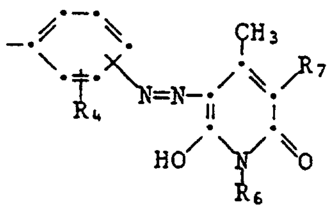

,

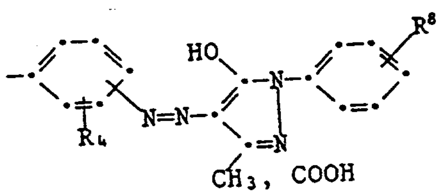

ou

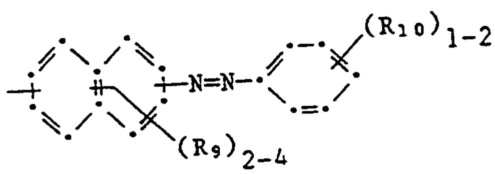

,

formules dans lesquelles $R_4$ représente un atome d'hydrogène ou de chlore, ou un groupe méthyle, méthoxy, sulfo, acétylamino, hydroxyméthylamino, propionylamino ou carboxy, $R_5$ représente 1 à 3 groupes, identiques ou différents, choisis parmi l'atome de chlore et les groupes sulfo, méthyle, méthoxy, hydroxy, carboxy, o-sulfophénylazo, m-sulfophénylazo et p-sulfophénylazo, $R_6$ représente un atome d'hydrogène ou un groupe alkyle en $C_1$ à $C_4$ ou alcoxy($C_1$ à $C_4$)alkyle($C_1$ à $C_4$), $R_7$ représente un groupe sulfométhyle, cyano ou carbamoyle, $R_8$ représente un atome de chlore ou un groupe méthyle, méthoxy, sulfo ou carboxy, $R_9$ représente 2 à 4 substituants, identiques ou différents, choisis parmi les groupes hydroxy et sulfo, et $R_{10}$ représente 1 ou 2 groupes, identiques ou différents, choisis parmi l'atome d'hydrogène et les groupes méthyle, méthoxy, sulfo, hydroxy, amino, acétylamino et hydroxyacétylamino.

**11.** Procédé selon l'une quelconque des revendications 1 à 9, **caractérisé** en ce que A' a la même signification que A.

**12.** Procédé selon la revendication 11, pour la préparation de composés de formule :

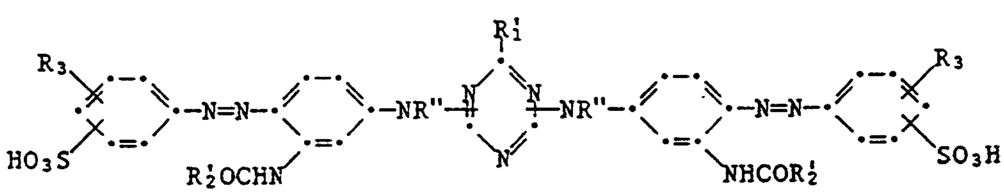

(5),

dans laquelle R'', $R'_1$, $R'_2$ et $R_3$ ont chacun les significations indiquées dans la revendication 10.

**13.** Procédé selon la revendication 12 pour la préparation de composés de formule (5), pour lesquels $R'_1$ représente un groupe morpholino, N-hydroxyalkyl($C_1$ à $C_2$)amino ou N,N-di(hydroxyalkyl($C_1$ à $C_2$))-amino, $R'_2$ représente un groupe méthyle, éthyle ou hydroxyméthyle, R'' représente un atome

d'hydrogène et $R_3$ représente un atome d'hydrogène ou de chlore, ou un groupe méthyle ou méthoxy.

**14.** Procédé selon la revendication 12, pour la préparation de composés de formule :

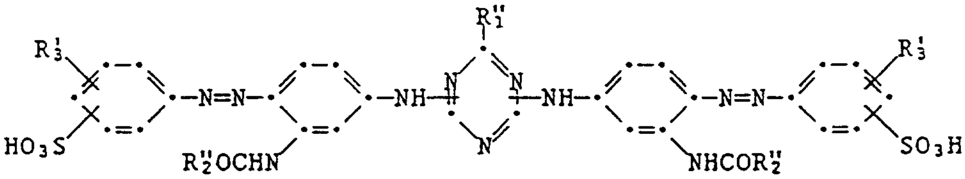

(6),

dans laquelle $R''_1$ représente un groupe N,N-di($\beta$-hydroxyéthyl)amino ou morpholino, $R''_2$ représente un groupe méthyle ou hydroxyméthyle et $R'_3$ représente un atome d'hydrogène ou un groupe méthyle ou méthoxy.

**15.** Utilisation des colorants préparés par un procédé selon l'une quelconque des revendications 1 à 14, pour la teinture et l'impression de matières fibreuses azotées et en particulier de matières fibreuses cellulosiques.

**16.** Utilisation selon la revendication 15, **caractérisée** en ce que l'on teint des mélanges de fibres synthétiques et de matières fibreuses cellulosiques, en particulier des tissus mélangés de polyester et de coton, en présence d'un colorant dispersé pour les fibres de polyester, dans les conditions de teinture convenant aux fibres de polyester.

**17.** Procédé de teinture de tissus mélangés de polyester et de coton avec des colorants dispersés et des colorants directs, **caractérisé** en ce que l'on utilise, dans un procédé en une seule étape et à un seul bain, outre les colorants dispersés, des colorants de formule (1) préparés par le procédé selon la revendication 1, et on effectue la teinture dans un bain aqueux, à une température comprise dans l'intervalle allant de 100 à 150 °C, de préférence comprise dans l'intervalle allant de 120 à 130 °C, et à un pH compris entre 4 et 7,5.